# EUROPÄISCHE PATENTSCHRIFT

(11) **EP 2 566 789 B1**
(45) Veröffentlichungstag und Bekanntmachung des Hinweises auf die Patenterteilung: **15.01.2014**
(21) Anmeldenummer: 12704075.6
(22) Anmeldetag: 14.02.2012
(51) Int. Cl.: B65G 1/04

(54) **SHUTTLE FÜR EIN LAGER- UND KOMMISSIONIERSYSTEM**
SHUTTLE FOR A STORAGE AND ORDER-PICKING SYSTEM
NAVETTE POUR UN SYSTÈME DE STOCKAGE ET DE PRÉPARATION DE COMMANDES

(30) Priorität: 21.02.2011 DE 102011012423
(43) Veröffentlichungstag der Anmeldung: 13.03.2013
(73) Patentinhaber: SSI Schäfer Noell GmbH Lager-und Systemtechnik, 97232 Giebelstadt (DE)
(72) Erfinder: MATHYS, André, CH-6373 Ennetbürgen (CH); KELLER, Rudolf, CH-8832 Wollerau (CH)
(74) Vertreter: Witte, Weller & Partner
(86) Internationale Anmeldenummer: PCT/EP2012/052482
(87) Internationale Veröffentlichungsnummer: WO 2012/113679

(56) Entgegenhaltungen:
- EP-A2- 2 022 732
- WO-A1-2010/090515
- DE-A1- 3 533 063
- DE-A1- 19 509 951
- DE-U1- 20 112 328

## Beschreibung

Die vorliegende Erfindung betrifft ein Fahrzeug zum Betrieb innerhalb einer Regalgasse, die zwischen einem ersten Regal und einem gegenüberliegenden zweiten Regal definiert ist, wobei das Fahrzeug ein Fahrgestell aufweist, das sich im Wesentlichen entlang einer Längsseite des ersten Regals erstreckt, an der das Fahrzeug geführt verfahrbar ist; mindestens einen Fahrantrieb; einen Hubschlitten, der vertikal beweglich in dem Fahrgestell gelagert ist; einen Hubantrieb zum vertikalen Bewegen des Hubschlittens relativ zum Fahrgestell; mindestens ein Lastaufnahmemittel, das jeweils derart frei kragend am Hubschlitten befestigt ist, dass ein anderes Fahrzeug, das in der Regalgasse gleiche Regalebenen bedient und das an einer gegenüberliegenden Längseite des zweiten Regals geführt ist, während einer Längsfahrt in der Regalgasse am Fahrzeug vorbeifahren kann, und dass Zu- und/oder Abführförderer über- und unterfahren werden können, die in Regalgasse hinein reichen.

Ein derartiges Fahrzeug ist in der EP 2 022 732 A2 gezeigt.

Die DE 35 33 063 A1 zeigt ein Regalgerät für ein Werkzeugregal. Die DE 195 09 951 A1 offenbart ein Verfahren sowie eine Vorrichtung zum umsortierten Lagern von Waren oder sonstigen Gegenständen. Das Dokument DE 201 12 328 U1 offenbart eine Kommissionieranlage mit einem Behälterregal und zugeordnetem Regalbediengerät.

In der herkömmlichen Lagertechnik werden Regale mit Regalbediengeräten bedient. Ein Regalbediengerät ist üblicherweise in vertikaler und horizontaler Richtung in einer Regalgasse beweglich, die zwischen zwei benachbarten Regalen definiert ist. Das Regalbediengerät verfügt über ein Lastaufnahmemittel, mit welchem Lagereinheiten aus bzw. von (Regal-)Lagerplätzen entnommen und in bzw. an Lagerplätze abgegeben werden können. Eine derartige "Bedienung" (Versorgung) des Regals mit Lagereinheiten erfolgt üblicherweise über einen stirnseitig angeordneten Vertikallift, an den das Regalbediengerät - meist über angetriebene Pufferbahnen - Lagereinheiten zum Zwecke einer Auslagerung abgibt oder von dem das Regalbediengerät - wiederum meist über den Umweg von angetriebenen Pufferbahnen - Lagereinheiten zum Zwecke einer Einlagerung abholt.

Pro Regalgasse ist üblicherweise ein einziger stationärer Vertikallift vorgesehen, dessen Lastaufnahmemittel ausschließlich in der vertikalen Richtung beweglich ist und der von einem Regalbediengerät - oder mehreren Regalbediengeräten, die dann kollisionsfrei vertikal übereinander angeordnet sind - mit Lagereinheiten versorgt wird. Der Vertikallift an der Stirnseite der Regalgasse stellt aber eine materialflusstechnische Engstelle nach Art eines "Flaschenhalses" dar. Die (Förder-)Kapazität des Vertikallifts stellt die Obergrenze der potenziell möglichen Ein- und Auslagerungen in die bzw. aus der Regalgasse dar. In Abhängigkeit von den Wegen (Höhen), die der Vertikallift zurücklegen muss, um eine Lagereinheit abzuholen oder abzugeben, reduziert sich die Leistungsfähigkeit zusätzlich. Je länger die Wege sind, desto weniger Lagereinheiten können innerhalb einer Zeiteinheit ein- oder ausgelagert werden. Das Gleiche gilt natürlich für Wege, die durch die Regalbediengeräte innerhalb der Regalgassen zurückgelegt werden müssen, um eine Lagereinheit stirnseitig abzuholen oder abzugeben. Natürlich hängen diese Faktoren auch von der Dimension des Regals ab. Je höher das Regal ist, desto länger können die Wege für den Vertikallift sein. Je länger das Regal bzw. je tiefer die Regalgasse ist, desto länger können die Wege für die Regalbediengeräte sein.

Ein derart aufgebautes System ist in dem Patent US 7,261,509 B2 beschrieben.

Bei einem weiteren klassischen Ansatz erfolgt die Versorgung des Regals allein durch ein einziges Regalbediengerät pro Regalgasse, das üblicherweise boden- und/oder deckenseitig entlang einer oder mehrerer Fahrschienen geführt ist. Die Lagereinheiten werden über einen Zuführförderer an die Stirnseite des Regals bzw. den Anfang der Regalgasse transportiert, von wo die Lagereinheiten von dem Regalbediengerät abgeholt werden. Auszulagernde Lagereinheiten werden vom Regalbediengerät an die Stirnseite des Regals transportiert, um an einen Abführförderer abgegeben zu werden. Diese Förderer schließen meist unmittelbar an die Stirnseiten der die Regalgasse begrenzenden Regale an, um die Wege für das Regalbediengerät möglichst kurz zu halten. Diese Anordnung der Förderer wird auch als Vorzone bezeichnet.

Um horizontalen Bewegungen des Regalbediengeräts von vertikalen Bewegungen seines Lastaufnahmemittels zu entkoppeln, wurde bereits vorgeschlagen, eine Vielzahl von so genannten Einebenen-Bediengeräten anstatt eines einzigen Regalbediengeräts einzusetzen. Da ein Einebenen-Bediengerät keinen Hub hat, versorgt es lediglich eine einzige Regalebene. Üblicherweise ist das Einebenen-Bediengerät (zweiseitig) regalgebunden geführt, d.h. es fährt auf Fahrschienen, die in horizontaler Richtung entlang den Regalen in der Regalgasse befestigt sind. Jede Regalebene wird durch ein einziges Einebenen-Bediengerät versorgt. Die vertikale Bewegung der Lagereinheiten erfordert dann wiederum einen stirnseitig angeordneten Vertikallift, der Lagereinheiten mit angetriebenen Pufferbahnen auf jeder Regalebene austauscht. Auch bei diesem Ansatz stellt der Vertikallift den materialflusstechnischen Engpass dar. Ein derartiges Einebenen-Bediengerät wird z.B. unter der Bezeichnung "Multishuttle" im Markt vertrieben.

Bei einem anderen Kommissionierkonzept, wie es in der Patentanmeldung WO 2010/090515 A1 beschrieben ist, werden einzelne Lagereinheiten, z.B. Verpackungseinheiten, zu größeren Lagereinheiten, z.B. zu einer Palettenlage von Verpackungseinheiten, zusammengefasst, dann auf spezielle Lagertablare mit rippenartigen Böden für ein kämmendes Wechselspiel mit Lastaufnahmemitteln von Bediengeräten umgelagert und anschließend auf diesen Lagertablaren in Regale eingelagert. Die Lagertablare dienen dann als Fachböden. Von dort werden einzelne Verpackungseinheiten von anderen Regalbediengeräten entnommen, die in horizontaler und vertikaler Richtung in einer anderen Gasse verfahrbar sind. Diese Regalbediengeräte verfügen über ein Lastaufnahmemittel, das in der Querrichtung (relativ zu der Regalgasse) ein- und ausfahrbare Zinken (Stäbe) aufweist. Entnommene Verpackungseinheiten werden dann an einen Abführförderer abgegeben, der sich entlang der anderen Regalgasse erstreckt und dem Lagerregal sowie dem (anderen) Regalbediengerät gegenüberliegt.

Regalbediengeräte, die innerhalb einer einzigen Regalgasse kollisionsfrei über die gesamte Länge der Regalgasse verfahren werden können, werden in den Dokumenten DE 39 41 754 A1, DE 2 219 142, DE 42 38 322 C2, DE 42 42 811 A1 und DE 2 163 116 A offenbart. Ein Regalbediengerät mit mehreren Lastaufnahmemitteln wird in der DE 39 07 623 A1 offenbart.

Bei den oben beschriebenen herkömmlichen Lager- und Kommissionierstrategien ist es nachteilig, dass die Kommissionierleistung (Ein- und Auslagerungen/Zeiteinheit) oftmals nicht ausreicht, um den Anforderungen eines (Lager-)Betreibers gerecht zu werden. In diesem Zusammenhang spielen mehrere Faktoren eine Rolle. Ein wesentlicher Faktor ist in der singulären stirnseitigen Versorgung der Regalgassen mit Lagereinheiten zu sehen, weil dort immer nur ein einziger Vertikallift oder ein einziges Regalbediengerät zur Aufnahme und Abgabe von Lagergütern positioniert werden kann. Ein anderer Faktor ist in der Benutzung eines einzigen Regalbediengeräts pro Regalgasse zu sehen. Der Einsatz von mehreren Regalbediengeräten in der gleichen Regalgasse ist nicht möglich, weil sich die Regalbediengeräte innerhalb der Regalgasse nicht überholen können.

Es ist daher eine Aufgabe der vorliegenden Erfindung, ein Fahrzeug bereitzustellen, das die oben erwähnten Nachteile überwindet.

Die oben genannte Aufgabe-wird durch ein Fahrzeug gemäß Anspruch 1 gelöst.

Es wird weiterhin ein System zum automatisierten Lagern und Kommissionieren von Lagereinheiten, insbesondere Kleinteilebehältern, offenbart, wobei das System aufweist: eine Regalanordnung mit einer Vielzahl von Regalen, wobei jedes Regal mehrere Regalebenen übereinander aufweist, die wiederum jeweils eine Vielzahl von nebeneinander angeordneten Stellplätzen aufweisen, wobei ein erstes und ein zweites Regal eine Regalgasse zwischen sich definieren; eine Vielzahl von in der Regalgasse verfahrbaren, regalgebundenen Fahrzeugen zum Ein- und Auslagern der Lagereinheiten in die und aus den Stellplätzen in einer Querrichtung, wobei jedes Fahrzeug jeweils ein Fahrgestell, mindestens einen Fahrantrieb und mindestens ein Lastaufnahmemittel aufweist, wobei in der Regalgasse so viele Fahrzeuge vorgesehen sind, dass jede Regalebene mit mindestens einem Lastaufnahmemittel eines der Fahrzeuge bedienbar ist; mindestens einen regalintegrierten Heber mit mindestens einem Lastaufnahmemittel, wobei das Lastaufnahmemittel des Hebers eingerichtet ist, Lagereinheiten zwischen einen regalintegrierten Übergabeplatz, der den mindestens einen regalintegrierten Heber zugeordnet ist, und mindestens einem regalintegrierten Pufferplatz umzusetzen, wobei jeder der Pufferplätze nur vertikal unter oder über dem Übergabeplatz angeordnet ist; mindestens einen Förderer, der über einen Zuführ-/Abführförderer in die Regalgasse hineinreicht und dort an den Übergabeplatz koppelt und der einzulagernde Lagereinheiten zum Übergabeplatz hinfördert und auszulagernde Lagereinheiten vom Übergabeplatz wegfördert; und mindestens einen Querversetzer zum Austauschen der Lagereinheiten zwischen dem Zuführ-/Abführförderer und dem Übergabeplatz.

Mit dem System lassen sich mehrere Heber, in Längsrichtung X des Regals hintereinander, in ein Regal integrieren. Die Heber werden über Fördertechnik mit Lagereinheiten versorgt. Die materialschlusstechnische Engstelle des einzelnen Vertikallifts an der Stirnseite des Regals entfällt durch die Vielzahl der Heber im Regal. Die Leistung der Heber (beziehungsweise des Lifts) stellt nicht mehr länger die Obergrenze für Ein- und Auslagerspiele dar. Es können sogar so viele Heber in das Regal integriert werden, dass die Transportleistung des Förderers nicht mehr ausreicht, um alle Heber voll auszulasten. In diesem Fall ist die Erfindung trotzdem skalierbar, indem mehrere Förderer, vorzugsweise in unterschiedlichen Höhen, vorgesehen werden.

Insbesondere ist jedes Fahrzeug entlang einer horizontalen Führung am Regal verfahrbar, die vorzugsweise nur an dem ersten Regal oder dem zweiten Regal befestigt ist, und wobei das mindestens eine Lastaufnahmemittel jedes der Fahrzeuge derart horizontal frei kragend an den im Wesentlichen vertikal orientierten Hubschlitten angebracht ist, das sich in der Regalgasse auf gleicher Höhe gegenüberliegende Fahrzeuge während einer Längsfahrt kreuzen können, obwohl sich die Fahrgestelle beim Kreuzen vertikal überlappen. Die Lastaufnahmemittel überlappen sich horizontal (in der Kragrichtung), d.h. die Lastaufnahmemittel decken in einer Draufsicht auf die Regalgasse nahezu die gleiche Fläche ab.

Obwohl die Fahrzeuge mehrere Regalebenen bedienen, können sie sich in der Regalgasse kreuzen, d.h. aneinander vorbeifahren. Dies liegt insbesondere daran, dass die Fahrzeuge vorzugsweise einseitig an Längsseiten der Regale geführt sind, die der Regalgasse zugewandt sind. Durch die Höhenverstellbarkeit der Lastaufnahmemittel ist es möglich, die Lastaufnahmemittel inkl. Last so zu positionieren, dass Fahrzeuge, die aneinander vorbeifahren, mit ihren Lastaufnahmemitteln nicht kollidieren. Die Hubfunktion der Lastaufnahmemittel hat den weiteren Vorteil, dass ein Fahrzeug, dessen Lastaufnahmemittel sich auch auf einer zugeordneten Regalebene befindet, bei unzureichender Auslastung auf einer benachbarten Regalebene aushelfen kann, wo möglicheniveise das dieser Regalebene zugeordnete Lastaufnahmemittel (eines anderen Fahrzeugs) überlastet ist. Spitzenbelastungen lassen sich so auf eine einfache Weise ausgleichen.

Weiter ist es bevorzugt, wenn die Führungen von auf gleicher Höhe in einer Gasse vorgesehenen Fahrzeugen auf gleicher Höhe an sich gegenüberliegenden Längsseiten des ersten und zweiten Regals angeordnet sind.

Ein Befestigungsraster für Führungen und Längsträger der Regale kann beibehalten werden, so dass sich der Regalbau weniger komplex gestaltet. Die Führungen können auch als Längsträger des Regals eingesetzt werden, um beispielsweise Fachböden oder dergleichen zu tragen.

Außerdem ist es von Vorteil, wenn jede Führung ein Profil aufweist, das in der horizontal Längsrichtung der Regalgasse an vertikalen Regalstehern der Regale befestigt ist, die der Regalgasse zugewandt sind.

Die Konstruktion des Regalbaus muss im Vergleich zu konventionellen Regalen nicht geändert werden. Konventionelle Regale können nachgerüstet und umgerüstet werden, um die vorliegende Erfindung zu implementieren.

Vorzugsweise weist jede Führung ein C-Profil auf, in dessen Innerem ein oder mehrere Laufräder eines Fahrzeugs laufen und an dessen Äußerem vorzugsweise ein oder mehrere Stützräder eines vertikal in der jeweiligen Regalgasse benachbarten Fahrzeugs abgestützt sind.

Ein derartiges C-Profil hat den Vorteil, dass ein und dasselbe C-Profil zur Fixierung und Stabilisierung von zwei Fahrzeugen eingesetzt werden kann, die sich in vertikaler Richtung direkt gegenüberliegen. Die Anzahl der Führungen, die verbaut werden müssen, um die Fahrzeuge in den Regalgassen, vorzugsweise einseitig hängend, zu halten, wird auf ein Minimum reduziert.

Bei einer weiteren bevorzugten Ausgestaltung ist das Fahrgestell rahmenartig ausgebildet und weist mindestens ein Laufrad, das an den Fahrantrieb gekoppelt ist, sowie mindestens ein, vorzugsweise frei drehend gelagertes, Stützrad auf, wobei das mindestens eine Laufrad in einer oberen Hälfte des Fahrgestells und das mindestens eine Stützrad in einer unteren Hälfte des Fahrgestells angeordnet ist.

Die Kräfte, die durch die Bewegung des Fahrzeugs, insbesondere aufgrund der einseitigen Aufhängung am Regal, auf das Regal durch die Bewegung des Fahrzeugs übertragen werden, wird auf möglichst viele Kontaktpunkte verteilt. Der Kontakt erfolgt vorzugsweise über die Lauf-, Führungs- und/oder Stützräder. Die Räder sind so über das Fahrgestell verteilt, dass ein Aufschaukeln des Fahrzeugs, insbesondere in Stoppsituationen, vermieden wird. Wenn das Fahrgestell schwankt, obwohl das Fahrzeug eigentlich gestoppt ist, geht wichtige Zykluszeit für Ein- und Auslagerungen verloren, weil abgewartet werden muss, bis das Fahrzeug vollständig in Ruhe ist. Erst dann kann eine Feinpositionierung des Fahrzeugs relativ zum Regalplatz erfolgen. Schwankt das Fahrzeug jedoch nicht, kann ein Austausch von Lagereinheiten sofort erfolgen.

Vorzugsweise dreht sich das mindestens eine Laufrad um eine horizontal orientierte Achse und das mindestens eine Stützrad dreht sich um eine vertikal orientierte Achse.

Die Fahrzeuge hängen an den Laufrädern nach unten und werden aufgrund der Schwerkraft selbstständig ausgerichtet. Sollte es dennoch zu einer Kollision zwischen dem unteren Teil des Fahrgestells und den Regalen kommen, wird dies durch die Stützräder verhindert.

Bei einer bevorzugten Ausgestaltung ist der mindestens eine Heber im zweiten Regal in einer ersten Regalspalte angeordnet, die an eine zweite Regalspalte im zweiten Regal grenzt, in der der Übergabeplatz und der mindestens Pufferplatz angeordnet sind.

Bei dieser Ausführungsform erfolgt ein Austausch von Lagereinheiten zwischen dem Heber und den Übergabeplätzen sowie zwischen dem Heber und den Pufferplätzen in der Längsrichtung des Regals. Die Kombination aus Heber und Übergabe- und Pufferplätzen lässt sich so in einfache Regale integrieren und macht das Vorsehen eines Doppelregals überflüssig. Es geht weniger Raum in der Querrichtung Z verloren

Weiter ist es von Vorteil, wenn ein weiterer Heber in einer dritten Regalspalte des zweiten Regals angeordnet ist, die in der Längsrichtung an die zweite Regalspalte angrenzt.

Somit befinden sich zwei Heber im gleichen Regal. Die Transportleistung in der vertikalen Richtung wird verdoppelt, obwohl die Lagereinheiten über nur eine Regalgasse zu- bzw. abgeführt werden. Ferner ist es möglich, dass einer der Heber einlagert, während der andere Heber auslagert, wobei beide Heber auf den gleichen Übergabeplatz zugreifen. Dadurch ist es wiederum möglich, dass der Zuführ-/Abführförderer in der Regalgasse sowohl zum Einlagern als auch zum Auslagern genutzt werden kann. Genauso ist es möglich, dass beide Heber ausschließlich zum Einlagern oder ausschließlich zum Auslagern genutzt werden, wodurch sich der Durchsatz in der vertikalen Richtung verdoppelt.

Bei einer weiteren bevorzugten Ausführungsform sind der Übergabeplatz und der mindestens eine Pufferplatz eingerichtet, in der Längsrichtung mit dem Lastaufnahmemittel des mindestens einen Hebers zu kämmen.

Ferner ist es bevorzugt, wenn der mindestens eine Pufferplatz ferner eingerichtet ist, in der Querrichtung mit den Lastaufnahmemitteln der Fahrzeuge zu kämmen.

Bei einer weiteren bevorzugten Ausführungsform weist der Übergabeplatz einen Querversetzer auf, der eingerichtet ist, Lagereinheiten in der Querrichtung zu bewegen, ohne mit dem Lastaufnahmemittel des mindestens einen Hebers zu kollidieren.

Bei einer anderen Ausgestaltung der Erfindung ist der mindestens eine Heber in einem dritten Regal angeordnet, das Rücken an Rücken zum zweiten Regal angeordnet ist, wobei der Übergabeplatz und der mindestens eine Pufferplatz im zweiten Regal angeordnet sind und den mindestens einen Heber im dritten Regal in der Querrichtung Z jeweils gegenüberliegen.

Durch diese Art der Anordnung der Heber und Übergabe- bzw. Pufferplätze, gehen keine Stellplätze verloren, die der Fördertechnik in den Gassen auf gleicher Höhe gegenüberliegen. Bei dieser Art der Anordnung sind dort nämlich ebenfalls Heber, Übergabeplätze und/oder Transferplätze vorgesehen.

Bei einer weiteren vorteilhaften Ausgestaltung sind der Übergabeplatz und der mindestens eine Pufferplatz eingerichtet, in der Querrichtung mit dem Lastaufnahmemittel des mindestens einen Hebers und mit den Lastaufnahmemitteln der Fahrzeuge zu kämmen.

Bei dieser Ausführungsform folgt der Austausch der Lagereinheiten ausschließlich in der Querrichtung Z. Dies vereinfacht die Ausbildung der beteiligten Komponenten.

Bei einer weiteren vorteilhaften Ausgestaltung ist im dritten Regal mindestens ein weiterer Heber angeordnet, der einem weiteren Übergabeplatz und mindestens einem weiteren Pufferplatz im zweiten Regal gegenüberliegt.

Hier kommt wieder der Gedanke zum Ausdruck, dass pro Regal mehrere Heber und aber auch mehrere Übergabe- beziehungsweise Pufferplätze in der Längsrichtung hintereinander angeordnet werden können, um die Leistung des Transports in der vertikalen Richtung zu steigern.

Ferner ist es bevorzugt, wenn der Querversetzer ein Riemenheber, ein Rollenkamm oder ein Schieber ist.

Weiter ist es bevorzugt, wenn jedes Lastaufnahmemittel in horizontaler Richtung ein- und ausfahrbare Zinken und seitlich dazu angeordnete Förderer aufweist, wobei die Zinken vorzugsweise individuell ein- und ausfahrbar sind.

Die Lastaufnahmemittel der Heber und der Fahrzeuge können identisch ausgebildet sein. Dies erhöht die Modularität des Gesamtsystems, weil die Kosten für die Lastaufnahmemittel (Entwicklung, Herstellung, etc.) deutlich geringer als bei Systemen ausfallen, die eine Vielzahl verschiedener Komponenten einsetzen.

Es ist besonders bevorzugt, wenn die Stellplätze eingerichtet sind, mit den Lastaufnahmemitteln der Fahrzeuge in der Querrichtung zu kämmen.

Fachböden mit rippenartigen Erhöhungen können derartige Stellplätze darstellen, so dass eine kämmende Wechselwirkung zwischen den Lastaufnahmemitteln und den Stellplätzen möglich ist. Die Ein- und Auslagerung erfolgt bspw. durch Ein- und Ausfahren der Zinken in Kombination, mit einem Hub (Anheben beim Auslagern).

Vorzugsweise weist jede Regalebene eines Regals mit Heber entweder einen Übergabeplatz oder einen Pufferplatz auf.

Je mehr Pufferplätze in der Regalspalte vorgesehen sind, wo auch der Übergabeplatz angeordnet ist, desto mehr Möglichkeiten hat der Heber, eine Lagereinheit abzugeben oder aufzunehmen. Dabei ist es nicht zwingend erforderlich, dass eine einzulagernde Lagereinheit bereits auf Höhe der Regalebene abgesetzt wird, in die die einzulagernde Lagereinheit eingelagert werden soll. Durch die Hubfunktion der Shuttle können derartige Lagereinheiten auch aus angrenzenden Pufferplätzen abgeholt werden.

Da jedes Lastaufnahmemittel individuell verfahrbar ist, können beim Ein- und Auslagern mehr Lagerplätze als mit starr miteinander verbundenen Lastaufnahmemitteln angefahren werden. Damit steigt wiederum die Wahrscheinlichkeit, dass die Lastaufnahmemittel während eines Stopps des Fahrzeugs gleichzeitig Lagereinheiten mit dem Regal austauschen können.

Mit derartigen Fahrzeugen ist es möglich, gleichzeitig mehrere Ein- oder Auslagerungen in der gleichen Regalebene durchzuführen. Des Weiteren können sich die Fahrzeuge in der Regalgasse während einer Längsfahrt begegnen, ohne miteinander zu kollidieren. Ferner können die Fahrzeuge Förderer über- oder unterfahren, die zum Zwecke der Ein- und Auslagerung in die Regalgassen hineinreichen. Die Fahrzeuge können bedarfsgerecht in verschiedenen Regalebenen gleichzeitig eingesetzt werden, wobei die Vorteile von Einebenen-Bediengeräten beibehalten werden.

Vorzugsweise ist jedes Lastaufnahmemittel in einer horizontalen Ebene orientiert und weist in Querrichtung, vorzugsweise individuell, ein- und ausfahrbare Zinken sowie mindestens einen, vorzugsweise seitlich angeordneten, Querförderer auf.

Mit dem Querförderer können Lagereinheiten vom Lastaufnahmemittel in Richtung Regal abgegeben werden, ohne dass die Zinken ausgefahren werden. Mit dem Zinken kann das Lastaufnahmemittel in das Regal hineinreichen, um von dort Lagereinheiten abzuholen. Somit ist der Transfer der Lagereinheiten in beiden Richtungen (Einlagern und Auslagern) problemlos möglich. Die Zinken sind dabei vorzugsweise auf einer Höhe angeordnet, die unterhalb der Transportebene der Querförderer liegt. Wenn eine Lagereinheit aufgenommen wird, werden die Zinken unter die aufzunehmende Lagereinheit gefahren, das Lastaufnahmemittel wird leicht angehoben und die Zinken werden anschließend wieder eingefahren, wobei die Querförderer vorzugsweise spätestens dann angetrieben werden, wenn die aufzunehmende Lagereinheit in Kontakt mit den Querförderern kommt. Auf diese Weise wird die aufzunehmende Lagereinheit auf den Querförderer gezogen.

Ferner ist es von Vorteil, wenn jedes Lastaufnahmemittel zusätzlich eine in Längsrichtung verstellbare Seitenführung aufweist, die vorzugsweise ein Paar von Schiebern aufweist, wobei sich jeder Schieber im Wesentlichen in einer vertikalen Querebene senkrecht zur Längsrichtung erstreckt.

Die Seitenführung gewährleistet, dass einzulagernde Lagereinheiten in der Längsrichtung exakt in den Stellplätzen und positioniert werden können. Des Weiteren verhindert die Seitenführung der Lastaufnahmemittel der Fahrzeuge ein Abrutschen der Lagereinheiten während einer Längsfahrt in der Regalgasse, die durchaus mit hohen Geschwindigkeiten erfolgen kann. Gleichzeitig verhindert die Seitenführung ein Abrutschen der Lagereinheiten beim Bremsen des Fahrzeugs.

Bei einer vorteilhaften Ausgestaltung weist das Fahrgestell Laufräder und Stützräder auf.

Durch das Vorsehen von Lauf- und Stützrädern können die Fahrgestelle einseitig an den Regalen aufgehängt werden. Dies ermöglicht das Kreuzen von Fahrzeugen, die auf gleicher Höhe in der Regalgasse angeordnet sind.

Weiter ist es bevorzugt, wenn die Laufräder in einer oberen Hälfte des Fahrgestells gelagert sind und vorzugsweise um eine Achse in der Querrichtung drehen, und wobei die Stützräder in einer unteren Hälfte des Fahrgestells gelagert sind und vorzugsweise um eine Achse in der vertikalen Richtung drehen.

Bei einer weiteren bevorzugten Ausführungsform liegen die Laufräder innen und die Stützräder außen an auf gleicher Höhe gegenüberliegend angebrachten, vorzugsweise C-förmigen, Führungsprofilen an, während das Fahrzeug in der Regalgasse verfahren wird.

Die Führungsprofile haben also eine doppelte Funktion. Zum einen dienen sie als Laufschiene für die Laufräder. Zum anderen dienen sie als Stützschiene für die Stützräder. Auf diese Weise kann die Anzahl der Schienen, die in einer Regalgasse verbaut werden müssen, um die Fahrzeuge sicher zu führen, erheblich reduziert werden.

Bei einer weiteren bevorzugten Ausgestaltung sind die Lastaufnahmemittel in der vertikalen Richtung jeweils so zueinander beabstandet, dass entsprechend beabstandete Lastaufnahmemittel eines weiteren Fahrzeugs, das identische Regalebenen in der Regalgasse bedient, bei einer Längsfahrt einander kollisionsfrei kreuzen.

Außerdem ist es von Vorteil, wenn jedes Lastaufnahmemittel über mindestens einen Kragarm mit dem Hubschlitten verbunden ist.

Ferner wird ein Verfahren zum Einlagern einer Lagereinheit in ein Regal mit mehreren, übereinander angeordneten Regalebenen, die jeweils mehrere, nebeneinander angeordnete Stellplätze aufweisen, über einen Zuführ-/Abführförderer, der in eine Regalgasse hinein ragt und an mindestens einen Übergabeplatz koppelt, wobei jede Regalebene von mindestens einem Lastaufnahmemittel eines Fahrzeugs bedient wird, mit den folgenden Schritten offenbart: Zuführen einer Lagereinheit über den Zuführförderer; Bewegen der zugeführten Lagereinheit vom Zuführförderer auf den Übergabeplatz in einer Querrichtung mittels eines Querversetzers, der in einen Förderweg des Zuführförderers bewegbar ist; Abholen der Lagereinheit vom Übergabeplatz in einer Längsrichtung oder in der Querrichtung mittels eines regalintegrierten Hebers, indem ein Lastaufnahmemittel des Hebers in den Übergabeplatz horizontal ausgefahren, anschließend vertikal angehoben und anschließend horizontal eingefahren wird, vorzugsweise unter gleichzeitiger Betätigung eines Förderers der Teil des Lastaufnahmemittels des Hebers ist; Bewegen der abgeholten Lagereinheit in der vertikalen Richtung mittels des regalintegrierten Hebers; Abgeben der abgeholten Lagereinheit in der Längsrichtung oder der Querrichtung an einen Pufferplatz, der oberhalb oder unterhalb des Übergabeplatzes angeordnet ist, wobei der Pufferplatz einer Einlagerungsregalebene zugeordnet ist, wobei der Pufferplatz auf der Höhe der Einlagerungsregalebene oder benachbart dazu angeordnet ist, indem der Förderer des Lastaufnahmemittels des Hebers betätigt wird, sobald der Heber die Höhe des Pufferplatzes erreicht hat; Abholen der Lagereinheit aus dem Pufferplatz mittels einem der Fahrzeuge, indem das Fahrzeug horizontal in der Regalgasse entlang dem Regal zu einer Regalspalte, die den Übergabeplatz und den Pufferplatz aufweist, verfahren wird und indem ein Lastaufnahmemittel des Fahrzeugs, so fern es erforderlich ist, vertikal auf die Höhe des Pufferplatzes bewegt wird und indem dann das Lastaufnahmemittel des Fahrzeugs horizontal ausgefahren, vertikal angehoben und anschließend wieder eingefahren wird, vorzugsweise unter gleichzeitiger Betätigung eines Förderers, der Teil des Lastaufnahmemittels des Fahrzeugs ist; Bewegen des Fahrzeugs in einer horizontalen Richtung zu einer weiteren Regalspalte, die einen Einlagerungsplatz aufweist, und, sofern es erforderlich ist, vertikales Bewegen des Lastaufnahmemittels des Fahrzeugs auf die Höhe des Einlagerungsplatzes; und Betätigen des Förderers des Lastaufnahmemittels des Fahrzeugs derart, dass die Lagereinheit auf oder in den Einlagerungsplatz verschoben wird.

Ausführungsbeispiele der Erfindung sind in der Zeichnung dargestellt und werden in der nachfolgenden Beschreibung näher erläutert. Es zeigen:
- Fig. 1: ein Blockdiagramm eines Lager- und Kommissioniersystems;
- Fig. 2: eine Draufsicht auf eine teilweise dargestellte, erste Regalanordnung;
- Fig. 3: eine Teilansicht auf eine Front der Regalanordnung der Fig. 2;
- Fig. 4A und 4B: eine Vorder- und Rückansicht eines Fahrzeugs gemäß der Erfindung;
- Fig. 5: einen Zinken, der beim Fahrzeug der Fig. 4 zum Einsatz kommt;
- Fig. 6: ein Lastaufnahmemittel, das beim Fahrzeug der Fig. 4 zum Einsatz kommt und das eine Zinkenanordnung mit einer Vielzahl von Zinken gemäß der Fig. 5 aufweist;
- Fig. 7: eine weitere Teilansicht auf eine Front einer weiteren Regalanordnung in größerem Detail;
- Fig. 8: eine vergrößerte Darstellung der Fahrzeugaufhängung aus Fig. 7;
- Fig. 9: das Führungsprofil der Fig. 7 und 8 im Querschnitt;
- Fig. 10: eine perspektivische Darstellung von zwei Querversetzern im Bereich eines Zuführförderers;
- Fig. 11: eine perspektivische Ansicht eines in einen Rollenförderer integrierten Riemenhebers;
- Fig. 12: eine perspektivische Darstellung eines Bereichs einer weiteren Regalanordnung, die Zuführförderer auf unterschiedlichen Höhen, Übergabeplätze und Heber im Detail zeigt;
- Fig. 13: eine Draufsicht auf eine weitere Variante einer Regalanordnung;
- Fig. 14A und 14B: eine schematisierte, perspektivische Darstellung eines Pufferplatzes und eines Übergabeplatzes, wie sie bei der Anordnung der Fig. 13 zum Einsatz kommen;
- Fig. 15: eine weitere Abwandlung einer Regalanordnung in der Draufsicht; und
- Fig. 16: ein Flussdiagramm eines Einlagerungsverfahrens.

In der nachfolgenden Beschreibung der Figuren sind gleiche Merkmale mit den gleichen Bezugsziffern bezeichnet. Abwandlungen werden mit ähnlichen Bezugsziffern bezeichnet. Das Bezugszeichen 10 bezeichnet allgemein ein Lager- und Kommissioniersystem.

Wenn im Nachfolgenden von vertikalen und/oder horizontalen Orientierungen gesprochen wird, versteht es sich von selbst, dass die Orientierungen jederzeit durch eine Drehung miteinander vertauscht werden können und deshalb nicht einschränkend zu interpretieren sind.

Unter einem Regalbediengerät (auch als "RBG" abgekürzt) wird nachfolgend ein Förderzeug bzw. Bediengerät verstanden, das üblicherweise in einer Regalgasse zwischen zwei Regalen, meist schienengeführt, verfahren wird. Üblicherweise weist ein RBG ein Fahrwerk, einen oder mehrere Masten, ein Hubwerk sowie mindestens ein Lastaufnahmemittel auf. Der Mast kann an einer oberen Führungsschiene geführt und/oder am Boden mit einer Traverse verbunden sein, welche die Kräfte über Stütz- und Führungsrollen übertragen. Antriebe werden oft als Reibantriebe oder Zahnriemenantriebe ausgeführt. Ein Hubantrieb des RBG erfolgt häufig mittels umlaufender Zugmittel, wie z.B. Zahnriemen, Ketten oder Seilen. Für größere Beschleunigungen ist ein mitfahrender Omega-Fahrantrieb geeignet, bei dem sich das RBG mit einer Antriebsrolle an einem Zahnriemen entlang zieht. Die Lastaufnahme erfolgt z.B. bei Paletten über eine teleskopierbare Gabel und bei Behältern durch Umwälzen per Gurtförderer, Einziehen mit Zugeinrichtungen (z.B. Haken, Lasso oder Schwenkarm) oder mittels eines Hubtischs.

Unter einer Lagereinheit wird nachfolgend eine Handhabungseinheit verstanden, die insbesondere im Lagerbereich (Regal) eingesetzt wird. Eine Lagereinheit ist typischerweise artikelrein, kann aber auch gemischt sein. Die Lagereinheit kann ein Lagerhilfsmittel sowie das Lagergut selbst umfassen. Die Lagereinheit kann aber auch allein das Lagergut sein, wenn das Lagerhilfsmittel weggelassen wird. Als Lagerhilfsmittel werden üblicherweise Ladehilfsmittel eingesetzt, wie z.B. Paletten, Gitterboxen, Container, Behälter, Kartons, Tablare und Ähnliches. Lagergüter umfassen Stückgüter, Schüttgüter, Flüssigkeiten oder Gase. Schüttgüter, Flüssigkeiten und Gase benötigen zur weiteren Handhabung Packmittel, um Packstücke zu definieren. Im Nachfolgenden werden exemplarisch leere und gefüllte Behälter als Lagereinheiten betrachtet werden. Es versteht sich, dass alle Ausführungen zu den Behältern analog auch auf andere Lagereinheiten, wie z.B. Kartons oder andere Verpackungseinheiten, anwendbar sind.

Eine Regalanordnung (z.B. ein Regallager) umfasst üblicherweise eine Vielzahl von Regalen, die in Form von Einzelregalen oder Doppelregalen vorgesehen sind. Doppelregale sind Einzelregale, die Rücken an Rücken aufgestellt sind. Zwischen den Regalen sind Regalgassen definiert, die üblicherweise in Längsrichtung der Regale verlaufen und als Aktionsraum für ein RBG dienen. Die Regale enden an ihren, sich jeweils gegenüber liegenden Stirnseiten, die wiederum in einer Ebene senkrecht zur Längsrichtung der Regalgasse orientiert sind. Die Regale selbst weisen eine Vielzahl von (Regal-)Lagerplätzen bzw. Stellplätzen auf, die in Form von übereinanderliegenden Regalebenen angeordnet sind. Eine Regalspalte erstreckt sich in vertikaler Richtung innerhalb eines Regals und weist üblicherweise so viele Lager- bzw. Stellplätze übereinander auf, wie Regalebenen vorhanden sind.

Unter einem Vertikallift oder Heber wird nachfolgend eine Lagereinheiten-Handhabungseinheit mit einem Lastaufnahmemittel verstanden, das ausschließlich in der vertikalen Richtung beweglich ist und somit allein zur Überwindung von Höhendifferenzen eingesetzt wird. Ein Vertikallift bzw. Heber ist, im Gegensatz zu dem RBG, relativ zu den Regalen stationär angeordnet.

Unter einem Fahrzeug bzw. Shuttle wird nachfolgend ein Regalbediengerät verstanden, das im Wesentlichen eine (einzige) Regalebene bedient, um die Lager- bzw. Stellplätze dieser Regalebene mit Lagereinheiten zu versorgen, d.h. Lagereinheiten ein- und auszulagern.

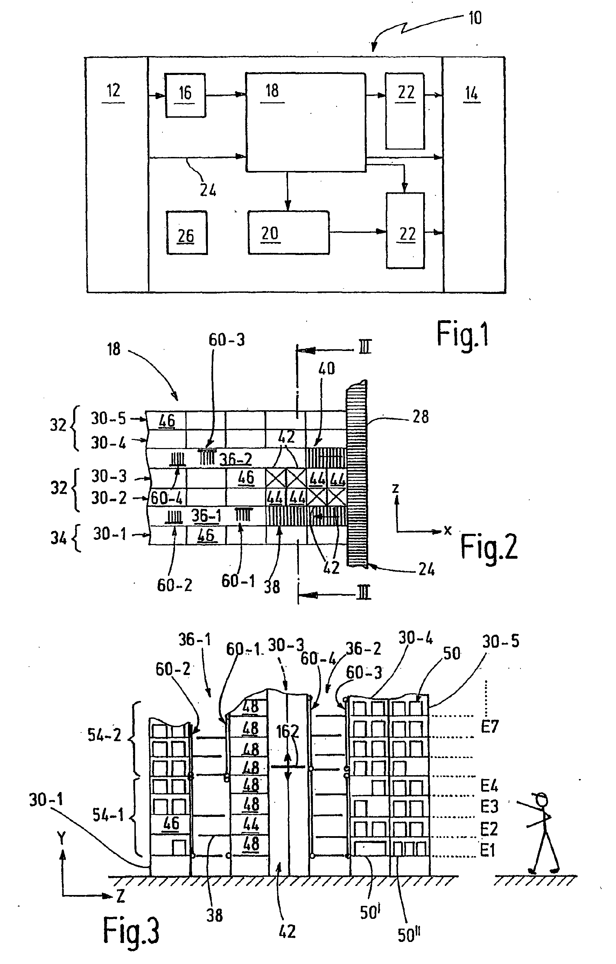

Fig. 1 zeigt ein Blockdiagramm eines Lager- und Kommissioniersystems 10. Das System 10 kann einen Wareneingangsbereich 12, einen Warenausgangsbereich 14, einen oder mehrere Vereinzelungsstationen 16, eine Regalanordnung 18, eine oder mehrere Pack- und/oder Versandstationen 22 mit einem optional daran angeschlossenen Sorter 20 aufweisen. Die verschiedenen Elemente 12 bis 22 des Systems 10 sind über einen oder mehrere Förderer (bzw. eine Fördertechnik) 24 materialflusstechnisch miteinander verbunden, die in Fig. 1 durch Pfeile angedeutet sind. Die Steuerung des Systems 10 erfolgt über eine oder mehrere Steuereinheiten 26 (Lagerverwaltungsrechner, Materialflussrechner, etc), die verdrahtet und/oder drahtlos mit den Elementen 12 bis 24 sowie deren Untereinheiten (Antriebe, SPS, Schalter, Lichtschranken, sonstige Aktuatoren und dergleichen) kommunizieren.

Ein exemplarischer Materialfluss wird im System 10 nachfolgend anhand eines Beispiels von in der Fig. 1 nicht dargestellten (Kleinteile-)Behältern beschrieben werden, die in ein automatisiertes Kleinteilelager (AKL) ein- und ausgelagert werden.

Eine Gruppe von Behältern wird im Wareneingangsbereich 12 angeliefert. Behälterstapel können in der Vereinzelungsstation 16 zu einzelnen Behältern separiert werden. Im Wareneingangsbereich 12 können die in den Behältern befindlichen Artikel oder Produkte identifiziert und der Steuerungseinheit 26 zwecks Inventur und Lagerplatzverwaltung mitgeteilt werden. Im Wareneingangsbereich 12 können lose Artikel oder Produkte außerdem in Behälter umgepackt werden, um anschließend in der Regalanordnung 18 (z.B. AKL) eingelagert zu werden. Eingelagerte Behälter werden gemäß Kommissionieraufträgen ausgelagert. Ein Kommissionierauftrag entspricht einem oder mehreren Kundenaufträgen und enthält üblicherweise mehrere Auftragspositionen in Form von Auftragszeilen. Jede Auftragszeile bestimmt einen Produkt- oder Artikeltyp sowie eine benötigte Anzahl dieses Produkt- bzw. Artikeltyps. Die Aufträge werden in den Pack- und/oder Versandstationen 22 zusammengestellt. Wenn die Reihenfolge (Sequenz), in der die bestellten Produkte bzw. Artikel an den Kunden geschickt werden, beachtlich ist und die Behälter nicht bereits in der richtigen Sequenz aus der Regalanordnung 18 ausgelagert werden, können zwischen die Pack- und/oder Versandstation(en) 22 und die Regalanordnung 18 ein oder mehrere Sorter 20 zwischengeschaltet werden. Von den Pack- und/oder Versandstationen 22 werden fertig kommissionierte Aufträge in den Warenausgangsbereich 14 verbracht, von wo sie zum jeweiligen Kunden transportiert werden.

Fig. 2 zeigt eine Draufsicht auf einen Teil der Regalanordnung 18 der Fig. 1 in schematisierter Form.

Die Regalanordnung 18 weist mehrere Regale 30 auf. Die Regale 30 sind in Längsrichtung X ausgerichtet. Eine rechts in der Fig. 2 dargestellte (und nicht näher bezeichnete) Stirnseite der Regalanordnung 18 bzw. der Regale 30 liegt in einer Ebene YZ, die senkrecht zur Längsrichtung X orientiert ist. Die Z-Achse gibt die Querrichtung und die Y-Achse gibt die Vertikalrichtung (Höhe) an.

In Fig. 2 sind exemplarisch fünf Regale 30-1 bis 30-5 gezeigt. Bei den Regalpaaren 30-2, 30-3, 30-4, 30-5 handelt es sich jeweils um ein Doppelregal 32 und beim Regal 30-1 handelt es sich um ein Einzelregal 34. Die Regale 30-1 und 30-2 definieren eine erste Regalgasse 36-1 zwischen sich. Die Regale 30-3 und 30-4 definieren eine zweite Regalgasse 36-2 zwischen sich.

Die Regalanordnung 18 der Fig. 2 wird materialflusstechnisch von einem Förderer 24 in Form eines Rollenförderers 28 mit Lagereinheiten versorgt, die hier nicht dargestellt sind. Der Rollenförderer 28 verläuft entlang der Stirnseite der Regale 30 und kann an einen Zuführförderer 38 und einen Abführförderer 40 koppeln, die jeweils senkrecht zum Rollenförderer 28 im Bereich der Stirnseiten orientiert sind. Die Förderer 38 und 40 reichen jeweils in die Regalgassen 36-1 und 36-2 hinein. Es versteht sich, dass die durch schwarze Pfeile angedeuteten Förderrichtungen beliebig orientiert sein können. Durch eine Umkehr der Förderrichtung kann der Zuführförderer 38 in einen Abführförderer 40 umgewandelt werden. Analoges gilt für den Abführförderer 40. Die Förderer bzw. Fördertechnikkomponenten 28, 38 und 40 sind im Beispiel der Fig. 2 in einer einheitlichen Höhe angeordnet, vorzugsweise in einem Bereich von 700 bis 800 mm. Der Förderer 24 ist dazu ausgelegt, ohne Probleme ca. 1500 Lagereinheiten pro Stunde zu transportieren. Es versteht sich, dass die in Fig. 2 gezeigte Förderer durch andere Förderertypen (Kettenförderer, Hängeförderer, Gurtbänder, etc.) ersetzt werden können. Natürlich können die Förderer auch um andere Förderertypen ergänzt werden.

Bei den Regalen 30 kann es sich um Regale 30 mit nicht näher bezeichneten Fachböden, seitlichen Auflagewinkeln oder Ähnlichem handeln. Vorzugsweise werden Fachböden mit sich in der Querrichtung Z erstreckenden, rippenförmigen Erhebungen eingesetzt, die auf eine kämmende Art und Weise mit den vorzugsweise zinkenförmig ausgebildeten Lastaufnahmemitteln der Bediengeräte wechselwirken. Ein Vorteil der Verwendung von Fachböden ist die freie Lagerplatzeinteilung. Fachböden haben üblicherweise eine Länge von 200 bis 300 cm, so dass unterschiedlich dimensionierte (Standard-)Lagereinheiten problemlos eingelagert werden können. Die Größe eines Lagerplatzes-ist im-Fall von gerippten Fachböden allein durch das Rastermaß der rippenförmigen Erhebungen definiert. Diese Vorteile zahlen sich besonders bei einer dynamischen Lagerplatzverwaltung aus, bei der Ort und Größe eines Lagerplatzes dynamisch, d.h. insbesondere bedarfsgerecht, durch eine Lagerplatzverwaltungs-Software (Steuerungseinheit 26) immer wieder auf das Neue zugewiesen werden.

Nachfolgend wird im Wesentlichen eine einfachtiefe Einlagerung und Auslagerung von Lagereinheiten beschrieben. Natürlich können Lagereinheiten auch mehrfachtief ein- und ausgelagert werden. Dies hängt im Wesentlichen von den Abmessungen der Lagerplätze und der Lastaufnahmemittel ab. Es versteht sich von selbst, dass Vorgänge, die lediglich im Lichte einer einfachtiefen Lagerung beschrieben werden, ohne Weiteres auf eine mehrfachtiefe Lagerung skaliert werden können, indem z.B. die Lagerplätze entsprechend tief und die Lastaufnahmemittel in einer Handhabungsrichtung entsprechend lang ausgebildet werden.

In der Fig. 2 dienen die Regale 30-1, 30-4 und 30-5 exemplarisch ausschließlich zur Lagerung von Lagereinheiten, weil dort keine Vertikallifte vorgesehen sind. In den Regalen 30-2 und 30-3 sind hingegen jeweils zwei Heber 42 in das jeweilige Regal 30-2 bzw. 30-3, d.h. in die jeweilige Regalzeile, anstatt der sonst dort vorgesehenen Lagerplätze integriert. Den Hebern 42 liegt in den angrenzenden Regalen 30-2 und 30-3 jeweils ein Übergabeplatz 44 gegenüber. Zwei nebeneinander angeordnete Übergabeplätze 44 substituieren in der Fig. 2 einen Stellplatz 46, der z.B. durch einen der oben beschriebenen Fachböden implementiert ist. Exemplarisch hat ein derartiger Fachboden die Größe von zwei in Längsrichtung X angeordneten standardisierten Lagereinheiten, so dass jeder Übergabeplatz 44 und jedes Lastaufnahmemittel 42 im Beispiel der Fig. 2 jeweils eine Standardlagereinheit handhaben kann. Unter einem Heber 42 wird, wie bereits erwähnt, eine stationäre Lagereinheiten-Handhabungseinheit verstanden, die Lagereinheiten ausschließlich in der vertikalen Richtung Y transportiert. Im Unterschied zu den herkömmlichen Vertikalliften sind die Heber 42 aber in die Regale 30 bzw. den Regalbau integriert. Jeder Heber 42 weist mindestens ein Lastaufnahmemittel auf. Wenn z.B. zwei Lastaufnahmemittel übereinander vorgesehen sind, kann eine vertikale Teilung der Lastaufnahmemittel der Teilung der Zu- und/oder Abführförderer 38 und 40 entsprechen.

Bezug nehmend auf Fig. 3 ist eine Schnittansicht entlang der Linie III-III in Fig. 2 gezeigt. In der Fig. 3 blickt man in der Längsrichtung X in die Regalgassen 36-1 und 36-2 hinein. Die Darstellung der Fig. 3 weicht leicht von der Fig. 2 ab, indem in Fig. 3 explizit eine zweifachtiefe Lagerung in den Regalen 30 gezeigt ist. Die Regale 30 weisen jeweils mehrere Regalebenen Eᵢ in der vertikalen Richtung Y übereinander auf, wobei die Nummerierung mit der untersten Regalebene E₁ beginnt. Die meisten Stellplätze 46 der Regalebenen Eᵢ sind in der Fig. 3 doppelttief mit Lagereinheiten 50 belegt. In der Fig. 3 ist lediglich im ersten Regal 30-1 ein Stellplatz 46 komplett frei. Vereinzelt sind einzelne Lagerplätze frei, wie es in den Ebenen E₁ des Regals 30-1, E₃ und E₄ des Regals 30-4 und **E₅** des Regals 30-5 veranschaulicht ist. Exemplarisch sind in der ersten Ebene E₁ der Regale 30-4 und 30-5 eine längere Lagereinheit 50' und drei kürzere Lagereinheiten 50" angedeutet.

In der Schnittdarstellung der Fig. 3 erkennt man deutlich den in Bezug auf die Stirnseite vorn stehenden Heber 42 im Regal 30-3, der eine Regalspalte anstelle der dort üblicherweise vorgesehenen Fachböden ersetzt.

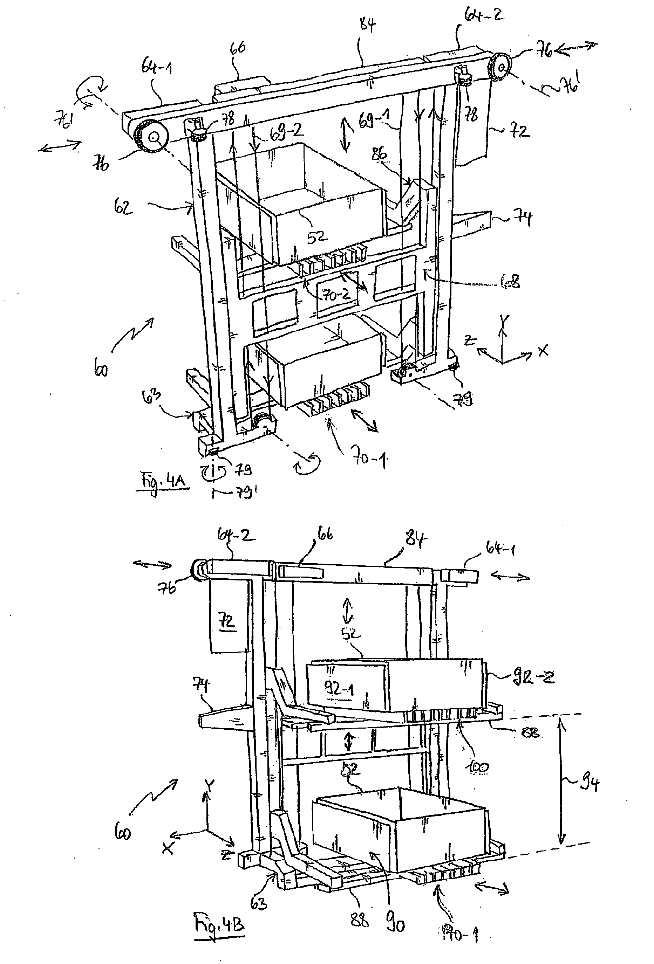

Der Zuführförderer 38 ist einfachtief ausgebildet und koppelt an den Übergabeplatz 44 im Regal 30-2. Für eine doppelttiefe Handhabung werden also zwei Lagereinheiten 50 in Längsrichtung X hintereinander über den Zuführförderer 38 zugeführt und nacheinander in den Übergabeplatz 44 überführt, wie es nachfolgend noch genauer beschrieben werden wird. Auf dem Zuführförderer 38 erfolgt der Transport der Lagereinheiten 50 in der Längsrichtung X. Die Übergabe in den Übergabeplatz 44 erfolgt in der Querrichtung Z. Der Heber 42 holt mit seinem Lastaufnahmemittel, das nachfolgend unter Bezugnahme insbesondere auf die Fig. 4 bis 6 noch genauer beschrieben werden wird, die Lagereinheit 50 (oder Lagereinheiten 50) in der Querrichtung Z aus dem Übergabeplatz 44 und bewegt die abgeholten Lagereinheiten 50 in der vertikalen Richtung Y auf die Höhe einer zur Einlagerung vorbestimmten Regalebene Eᵢ (oder auf Höhe einer unmittelbar benachbarten Regalebene Eⱼ) und gibt die abgeholten Lagereinheiten 50 an einen Pufferplatz 48 auf dieser Höhe ab. Die Abgabe erfolgt analog zur Aufnahme in umgekehrter Reihenfolge der Bewegungsschritte.

Die Pufferplätze 48 sind oberhalb und/oder unterhalb des Übergabeplatzes 44 in einer Regalspalte des Regals 30-2 angeordnet. Die Pufferplätze 48 können alle oder nur einige der (Standard-)Lagerplätze oberhalb und unterhalb des Übergabeplatzes 44 ersetzen. Vorzugsweise bilden der Übergabeplatz 44 und die Pufferplätze 48 eine turmartige Säule (Regalspalte) aus, die keine (Standard-)Lagerplätze mehr aufweist. Die Pufferplätze 48 weisen im Gegensatz zum Übergabeplatz 44 vorzugsweise keine Fördertechnikkomponenten auf, um dort abgestellte Lagereinheiten 50 in Richtung des Hebers 42 oder in Richtung eines Zuführförderers 38 oder Abführförderers 40 zu bewegen. Auf diese Weise lassen sich Kosten einsparen, wie sie im Zusammenhang mit den herkömmlichen Puffer(förder)bahnen stehen.

Es versteht sich, dass auch mehrere Übergabeplätze 44 in ein und dergleichen Säule (Regalspalte) vorhanden sein können, wenn mehrere Förderer 38 und/oder 40 in unterschiedlichen Höhen seitlich an die Säule koppeln. Dies kann z.B. der Fall sein, wenn es mehrere Ein-/Auslagerungsebenen gibt. In der Fig. 3 ist eine einzige Einlagerungsebene auf Höhe der zweiten Regalebene E₂ gezeigt. Es ist aber genauso möglich, beispielsweise auf der fünften Regalebene E₅ einen weiteren Zuführförderer 38 über dem in der Fig. 3 gezeigten Zuführförderer 38 ergänzend vorzusehen.

Eine weitere Besonderheit der Regalanordnung 18, wie sie in den Fig. 2 und 3 gezeigt ist, ist in den Fahrzeugen 60 zu sehen, die nachfolgend auch Shuttle genannt werden und die Funktion eines im Wesentlichen in der Längsrichtung X verfahrbaren Bediengeräts zur Versorgung einer jeweils zugeordneten Regalebene Eᵢ haben. In jeder Regalgasse 36 werden mehrere Fahrzeuge 60 gleichzeitig betrieben. In der Regalgasse 36-1 sind zwei näher bezeichnete Shuttle 60-1 und 60-2 sowie ein weiteres Shuttle (vgl. Fig. 3) dargestellt. In der Regalgasse 36-2 werden neben den näher bezeichneten Shuttle 60-3 und 60-4 weitere Shuttle 60 betrieben, wie es exemplarisch in der Fig. 3 angedeutet ist. Jedes Shuttle 60 weist z.B. zwei Lastaufnahmemittel auf, die nachfolgend noch genauer beschrieben werden. Die Shuttle 60 können einseitig an Längsseiten 138 der Regale 30 aufgehängt sein und in der Längsrichtung X in der Regalgasse 36 verfahren werden. Vorzugsweise sind die Lastaufnahmemittel vertikal so zueinander beabstandet, dass sie eine erste und dritte bzw. zweite und vierte Regalebene eines Regalmoduls 54, das im Beispiel der Fig. 3 die vier Regalebenen E₁ bis E₄ umspannt, gleichzeitig bedienen können. Die Shuttle 60 können Lagereinheiten 50 in beide Regale 30 ein- und auslagern, die an die Regalgasse 36 angrenzen, in der das Shuttle 60 betrieben wird. Der (vertikale) Abstand der Lastaufnahmemittel der Shuttle 60 ist vorzugsweise konstant und entspricht vorzugsweise einem Vielfachen eines (normierten) Regalebenenabstands 94. Die Lastaufnahmemittel der Shuttle 60 können vertikal beweglich ausgebildet sein, so dass sich auf gleicher Höhe gegenüberliegende Shuttle, wie z.B. die Shuttle 60-1 und 60-2 in der Regalgasse 36-1, jeweils alle Regalebenen Eᵢ eines ihnen zugeordneten Regalmoduls 54 mit Lagereinheiten 50 versorgen können. Wenn sich die Shuttle 60-1 und 60-2 bei einer Längsfahrt, d.h. einer gleichzeitigen Bewegung beider Shuttle 60-1 und 60-2 in der Längsrichtung X, in der Regalgasse 36-1 kreuzen, d.h. begegnen und/oder überholen, können die Shuttle 60-1 und 60-2 ohne Kollision aneinander vorbeifahren, indem ihre Lastaufnahmemittel um die Höhe 94 einer Regalebene relativ zueinander versetzt werden, wie es für die Shuttle 60 in der Regalgasse 36-2 in Fig. 3 gezeigt ist. Auf die gleiche Weise ist es möglich, dass die Shuttle 60 die Förderer 38 und 40 innerhalb der Regalgassen 36 unterfahren und/oder überfahren.

Die Möglichkeit, dass sich Shuttle 60 innerhalb der gleichen Regalgasse 36 kreuzen können und gleichzeitig mit einem Hub um die Höhe mindestens einer Regalebene Eᵢ ausgestattet sind, erlaubt außerdem einen simultanen Zugriff auf Lagereinheiten 50 aus der gleichen Regalebene Eᵢ. Dies gilt für Einlagerungen wie für Auslagerungen. Gleiches gilt aber auch für den Austausch von Lagereinheiten 50 mit den Pufferplätzen 48. Weil die Shuttle 60 mit einer Hubfunktion ausgestattet sind, ist es möglich, dass das Shuttle 60 eine Lagereinheit 50 aus einer anderen Regalebene Eⱼ holt, als an welche es die abgeholte Lagereinheit 50 abgibt. Somit ist es möglich, dass eine Lagereinheit 50 in eine Regalebene Eᵢ eingelagert wird, obwohl der Pufferplatz 48 auf der gleichen Regalebene Eᵢ leer war. Analoges gilt natürlich für Auslagerungsvorgänge.

Weil ein oder mehrere Heber 42 in der Längsrichtung X eines Regals 30 hintereinander und in der Querrichtung Z angrenzend an entsprechend viele Übergabeplätze 44 in einem unmittelbar angrenzenden Regal 30 vorgesehen sein können, erhöht sich die (Transport-)Leistung erheblich. Der "Flaschenhals" eines einzigen Hebers 42 (oder Vertikallifts) an der Stirnseite der Regale 30 lässt sich durch das mehrfache Vorsehen von Hebern 42 in den Regalen 30 eliminieren. Je mehr Heber 42 in der Längsrichtung X hintereinander eingesetzt werden, desto länger erstreckt sich der Förderer 38 bzw. 40 in die Regalgasse 36 hinein, wie es nachfolgend noch genauer beschrieben werden wird.

Zurückkehrend zu Fig. 3 wird nachfolgend die Beschreibung eines Einlagerungsvorgangs fortgesetzt. Nachdem der Heber 42 die Lagereinheit 50 an einen vorbestimmten Pufferplatz 48 abgegeben hat, z.B. an den Pufferplatz 48 in der siebten Regalebene E₇, kann das Shuttle 60-1 die dort gepufferte Lagereinheit 50 mit seinem oberen Lastaufnahmemittel abholen, anschließend in der Längsrichtung X der Regalgasse 36-1 zu einem Einlagerungsplatz (freier Stellplatz 46) fahren und die einzulagernde Lagereinheit 50 mit seinem Lastaufnahmemittel in der Querrichtung Z dort absetzen. Die Einlagerung kann sowohl in einen Stellplatz 46 im Regal 30-1 oder im Regal 30-2 erfolgen. Die Einlagerung kann in die siebte Regalebene E₇, aber auch in die achte Regalebene E₈ erfolgen. Analoges gilt natürlich in umgekehrter Reihenfolge für einen Auslagerungsvorgang.

Die Förderer 38 und 40 können als Einbahnstraßen benutzt, d.h. über eine Regalgasse 36 wird (nur) eingelagert und über eine andere Regalgasse 36 wird (nur) ausgelagert. Dies ist in Fig. 2 durch entsprechende Transportpfeile angedeutet, wobei die Regalgasse 36-1 zur Einlagerung und die Regalgasse 36-2 zur Auslagerung dient. In diesem Zusammenhang dienen die Heber 42 im dritten Regal 30-3 (vorzugsweise nur) als Einlagerlifte und die Heber 42 im zweiten Regal 30-2 (vorzugsweise nur) als Auslagerlifte. Stellt man sich die aus Übergabeplätzen 44, Pufferplätzen 48 und Hebern 42 bestehenden Funktionseinheiten fortgesetzt in den Regalen 30-4 und 30-5 vor, insbesondere bei gespiegelter Anordnung an dem nicht dargestellten anderen Ende der Regalgassen 36, so wird klar, dass eine erste Funktionseinheit zur Einlagerung und eine zweite Funktionseinheit zur Auslagerung in ein und dergleichen Gasse 36 eingesetzt werden kann. Üblicherweise wird aber jeder Heber 42 zum Ein- und Auslagern benutzt, wobei in diesem Fall in jeder Regalgasse 36 ein Zuführförderer 38 und ein Abführförderer 40 vorhanden sind, aber in unterschiedlichen Höhen. In der Fig. 3 kann man beispielsweise auf der Höhe der vierten Regalebene E₄ einen Abführförderer in der ersten Regalgasse 36-1 vorsehen, um in die erste Regalgasse sowohl ein- als auch auslagern zu können.

Ferner ist es möglich, dass die in der Fig. 2 gezeigten Heber 42 so ausgebildet sind, dass ihre Lastaufnahmemittel sowohl in positiver als auch in negativer Querrichtung Z betrieben werden können. In diesem Fall können die Heber 42 in dem dritten Regal 30-3 bei verlängerter Fortsetzung des Abführförderers 40 in die Tiefe der Regalgasse 36-2 hinein auch zum Auslagern benutzt werden. Nachdem diese Heber 42 eine einzulagernde Lagereinheit 50 an einem der in Fig. 3 dargestellten Pufferplätze 48 abgegeben haben, können sie direkt von den Shuttle 60-3 oder 60-4 eine auszulagernde Lagereinheit 50 bekommen, um auf ihrem Rückweg zum Fuße des Hebers 42 die auszulagernde Lagereinheit 50 auf das Niveau des Übergabeplatzes 44 mitzunehmen, um sie anschließend an den Abführförderer 40 des Förderers 24 abzugeben. Selbstverständlich könnte der Heber 42 auch Lagereinheiten 50 aus den Pufferplätzen 48 mitnehmen, die zuvor von dem Shuttle 60 in der Regalgasse 30-1 auf diesen Pufferplätzen 48 zum Zwecke einer Auslagerung abgesetzt wurden. Dies bedeutet mit anderen Worten, dass die Heber 42 in den Fig. 2 und 3 sowohl zum Einlagern als auch zum Auslagern eingesetzt werden können. Gleiches gilt für die Shuttle 60, die nachfolgend in den Fig. 4A und 4B genauer beschrieben werden.

In den Fig. 4A und 4B ist eine Ausführungsform eines Fahrzeugs 60 gezeigt, wobei man in Fig. 4A auf eine Rückseite, die üblicherweise dem Regal 30 zugewandt ist, und in Fig. 4B auf eine Vorderseite des Shuttles 60 blickt, die üblicherweise der Regalgasse 36 zugewandt ist. Das Shuttle 60 wird nachfolgend unter Bezugnahme auf beide Fig. 4A und 4B beschrieben.

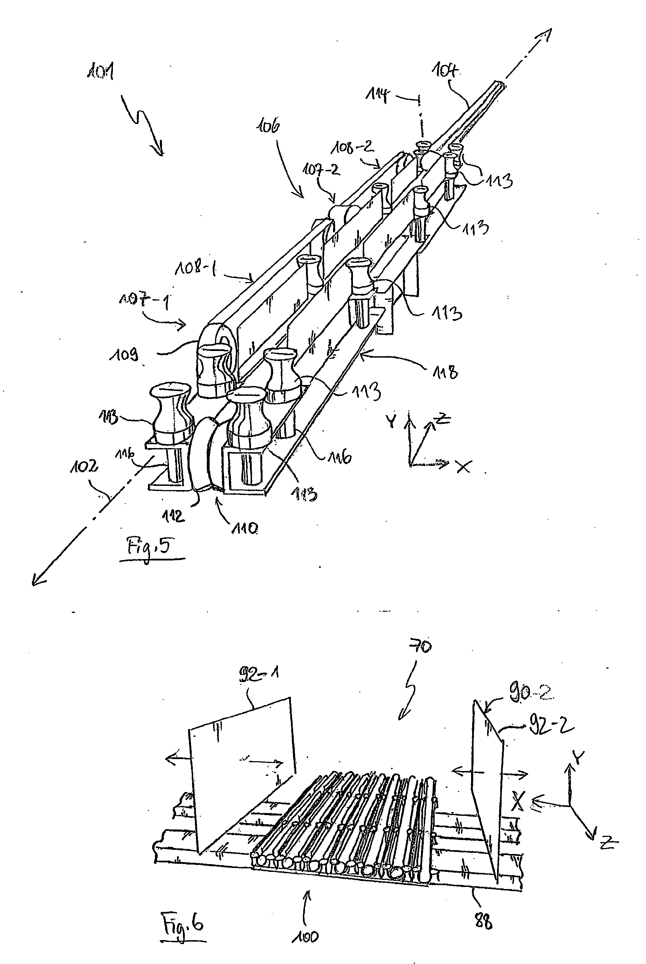

Das Fahrzeug bzw. Shuttle 60 weist ein Fahrgestell 62, mindestens einen Fahrantrieb 64, einen Hubantrieb 66, einen Hubschlitten 68, Zugmittel 69 sowie ein oder mehrere Lastaufnahmemittel 70 auf. In den Fig. 4A und 4B sind exemplarisch zwei Lastaufnahmemittel 70-1 und 70-2 gezeigt, die in vertikaler Richtung Y um die Höhe von exemplarisch zwei Regalebenen Eᵢ beabstandet sind (vgl. auch Pfeil 94 in Fig. 4B). Ferner kann das Shuttle 60 eine Steuereinheit 72, einen Stromabnehmer 74, ein oder mehrere Laufräder 76, ein oder mehrere Führungsräder 78 und/oder ein oder mehrere Stützräder 79 aufweisen. Das Lastaufnahmemittel 70 wird unter Bezugnahme auf die Fig. 5 und 6 näher beschrieben.

Das Fahrgestell 62 ist rahmenförmig ausgebildet und kann drei nicht näher bezeichnete Hauptschenkel aufweisen, die hier z.B. ein nach unten offenes "U" bilden, wobei das offene Ende über ein in der Querrichtung Z auskragendes Verbindungselement 63, das sich im Wesentlichen in der Längsrichtung X erstreckt, miteinander verbunden sind. Dieses auskragende Verbindungselement 63 ist so auszubilden, dass es nicht mit einem auf gleicher Höhe am benachbarten Regal 30 vorgesehenen Shuttle 60 kollidiert, wie es z.B. in der Regalgasse 36-2 der Fig. 3 gezeigt ist.

Der Hubschlitten 68 kann H-förmig ausgebildet sein und ist vertikal beweglich im Fahrgestell 62 gelagert. Der Hubschlitten 68 dient zur Aufnahme des mindestens einen Lastaufnahmemittels 70. Jedes Lastaufnahmemittel 70 ist in der Querrichtung Z frei kragend über Kragarme 86, die sich im Wesentlichen in der Querrichtung Z erstrecken, mit dem Hubschlitten 68 verbunden. Die Lastaufnahmemittel 70 sitzen auf Längsträgern 88 auf, die wiederum mit den Kragarmen 86 verbunden sind und die sich im Wesentlichen in der Längsrichtung X erstrecken. Des Weiteren ist der Hubschlitten 68 fest mit einem oder mehreren Zugmitteln 69 (z.B. Ketten, Zahnriemen, Seilen, etc.) verbunden, die von einem oder mehreren Hubantrieben 66 zwecks Bewegung des Hubschlittens 68 in der vertikalen Richtung Y angetrieben werden. Beim Shuttle 60 der Fig. 4 ist nur ein einziger Hubantrieb 66 vorgesehen, der mit einem Übertrieb 84 zusammenwirkt, um die beiden Zugmittel 69 anzutreiben, die in der Längsrichtung X außen liegenden Bereichen des Hubschlittens 68 befestigt sind, um die Hubkräfte gleich verteilt an den Hubschlitten 68 zu übertragen. Wenn nur ein Hubantrieb 66 für beide Lastaufnahmemittel 70-1 und 70-2 vorgesehen ist, werden die Lastaufnahmemittel 70-1 und 70-2 synchron relativ zum Fahrgestell 62 angehoben oder abgesenkt. Der vertikale Abstand 94 zwischen Lastaufnahmemitteln 70 eines Shuttles 60 beträgt vorzugsweise ein ganzes Vielfaches einer Höhe einer Regalebene Eᵢ. Es versteht sich, dass das Shuttle 60 auch mehr oder weniger als zwei Lastaufnahmemittel 70-1 und 70-2 aufweisen kann, und dass die Abstände zwischen den Lastaufnahmemitteln 70 beispielsweise auch der Höhe von drei Regalebenen Eᵢ entsprechen können. Die Lastaufnahmemittel 70 müssen nicht symmetrisch in der Vertikalrichtung Y zueinander beabstandet sein. Sie sollten jedoch so beabstandet sein, dass die Lastaufnahmemittel 70 eines in einer Regalgasse 36 direkt in der Z-Richtung benachbarten Shuttles 60 ohne Kollision passieren können. Dies bedeutet mit anderen Worten, dass die (höhenverfahrbaren) Lastaufnahmemittel 70 sich nur auf solchen Höhenniveaus aufhalten dürfen, wo beim benachbarten Shuttle gerade keine Lastaufnahmemittel aufhalten.

Fur jedes Lastaufnahmemittel 70 ist einen Hubantrieb 66 vorzusehen, so dass die Lastaufnahmemittel 70 individuell in der Vertikalrichtung Y bewegt werden können. In diesem Fall ist beim Kreuzen der Shuttle 60 hinsichtlich des in der Z-Richtung benachbarten Shuttles 60 nur darauf zu achten, dass nicht mehr Lastaufnahmemittel als Regalebenen des Moduls 54 in Summe bereitgestellt werden.

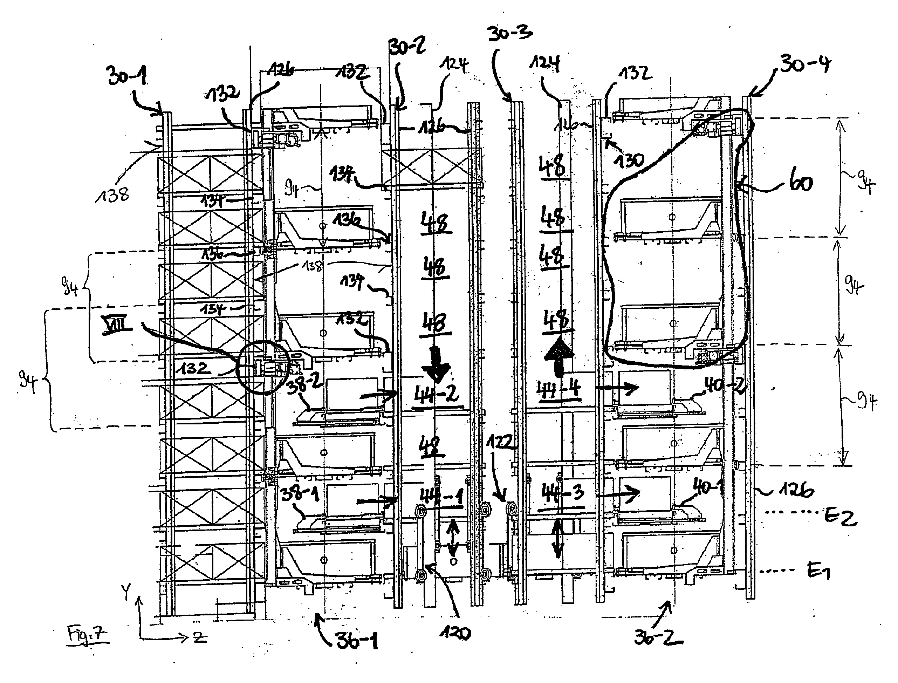

In der Längsrichtung X der Regalgasse 36 werden die Shuttle 60, die sich im Wesentlichen in der vertikalen XY-Ebene erstrecken, über die Laufräder 76 in vorzugsweise horizontal angeordneten Führungen 80 verfahren, die unter Bezugnahme auf die Fig. 7 bis 9 noch genauer beschrieben werden. Die Laufräder 76, von denen in Fig. 4 zwei in einer oberen Hälfte des Fahrgestells 62 angeordnet sind, können jeweils über einen eigenen Fahrantrieb 64-1- und 64-2 angetrieben werden. Es versteht sich, dass die Antriebe 64-1 und 64-2 miteinander synchronisiert sind, zumindest durch eine entsprechende Ansteuerung über die Ansteuereinheit 72, in der auch die Anfahrmaße und Ähnliches abgespeichert sein können. Ferner versteht es sich, dass die Laufräder 76 auch in einer unteren Hälfte des Fahrgestells 62 angeordnet werden können, auch ergänzend. In diesem Fall hängt das Shuttle 60 nicht am Regal 30, sondern steht auf dem Regal 30. Die Laufräder 76 drehen um Achsen 76', die in der Querrichtung Z orientiert sind.

Ferner können Führungsräder 78 vorgesehen sein, die bevorzugt in unmittelbarer Nähe zu den Laufrädern 76 angeordnet sind und die im Beispiel der Fig. 4 um eine vertikale Achse parallel zur Y-Achse (frei drehend) gelagert sind. Optional können die Führungsräder 78 eine gefederte Aufhängung aufweisen, um das Shuttle 60 innerhalb vorgegebener Toleranzen in der vertikalen XY-Ebene orientiert zu halten.

Außerdem können Stützräder 79 vorgesehen sein, die vorzugsweise in einem den Laufrädern 76 gegenüberliegenden, unteren Bereich des Fahrgestells 62 angeordnet sind. Die Stützräder 79 drehen ebenfalls um vertikale Achsen, die parallel zur Y-Achse orientiert sind. Die Stützräder 79 verhindern eine Kollision des (im Beispiel der Fig. 4 hängend an einem der Regale 30 geführten) Shuttle 60 mit den Regalen 30.

Es ist bevorzugt, wenn alle Räder 76, 78 und 79 auf einer Seite, vorzugsweise der Rückseite, des Shuttles 60 angeordnet sind.

Am Fahrgestell 62 kann ferner ein Stromabnehmer 74 angeordnet sein, der vorzugsweise einen vertikalen Abstand zu den Laufrädern 76 hat, der ein ganzzahliges Vielfaches der Höhe einer Regalebene Eᵢ darstellt. In der Fig. 4 entspricht dieser Abstand der Höhe von zwei Regalebenen Eᵢ. Die Gesamthöhe des Fahrgestells 62 in der Y-Richtung kann z.B. das Vierfache einer Regalebenenhöhe betragen. Die Länge des Fahrgestells 62 in der X-Richtung kann variieren und liegt vorzugsweise in der Größenordnung der Länge eines Stellplatzes 46. Das Fahrgestell 62 und der Hubschlitten 68 sind so geformt, dass die Lagereinheiten 50 in der positiven und in der negativen Querrichtung Z in die Regale 30 ein- und ausgelagert werden können, die die entsprechende Regalgasse 36 seitlich begrenzen, in der das Fahrzeug 60 betrieben wird. In den Fig. 4A und 4B ist deutlich zu erkennen, dass die Behälter 52 auch in der negativen Querrichtung Z durch das Fahrgestell 62 bzw. den Hubschlitten 68 hindurch bewegt werden können, um die Behälter 52 in das Regal 30 ein- oder auszulagern, an dem das in Fig. 4 gezeigte Fahrzeug 60 hängt.

Es versteht sich, dass anstatt eines Stromabnehmers 74 ein nicht dargestellter Energieakkumulator (z.B. Powercap) mitgeführt werden kann, der an speziell dafür vorgesehenen Ladestationen, vorzugsweise im Bereich der Übergabeplätze 44 und Pufferplätze 48, wieder aufgeladen wird.

Das Lastaufnahmemittel 70 weist in der positiven und negativen Querrichtung Z ein- und ausfahrbare Zinken 101 auf, die nachfolgend unter Bezugnahme auf Fig. 5 näher beschrieben werden. Ferner kann das Lastaufnahmemittel 70 eine Seitenführung 90 aufweisen, die im Beispiel der Fig. 4 in Form von zwei plattenförmig ausgebildeten Schiebern 92-1 und 92-2 ausgebildet ist, die wiederum in der Längsrichtung X aufeinander zu und voneinander weg bewegt werden können, um Lagereinheiten 50 seitlich zu sichern und während Einlagerungen und Auslagerungen zu führen.

Bezug nehmend auf Fig. 5 ist ein einzelner Zinken 101 einer Zinkenanordnung 100 (Fig. 6) gezeigt. Jeder Zinken 101 ist entlang einer Achse 102 sowohl in positiver als auch in negativer Richtung ein- und ausfahrbar. Die Achse 102 ist vorzugsweise parallel zur Querrichtung Z im montierten Zustand des Lastaufnahmemittels 70 orientiert. Der Zinken 101 weist einen Stab 104 auf, der vorzugsweise aus Karbon hergestellt ist und eine Länge hat, die der Länge des Lastaufnahmemittels 70 (in der Querrichtung Z) nahezu entspricht. Die Länge des Stabs 104, und somit des Lastaufnahmemittels 70, ist abhängig davon, ob einfach- oder mehrfachtief ein- und ausgelagert wird.

Ferner kann jeder Zinken 101 einen (Quer-)Förderer 106 aufweisen, der im Beispiel der Fig. 5 aus zwei hintereinander angeordneten Riemenförderern 108-1 und 108-2 mit jeweiligen Antrieben 107-1 und 107-2 besteht. Die Riemenförderer 108 sind parallel zum Stab 104 orientiert und seitlich zu diesem angeordnet. In der Fig. 5 sind die Riemenförderer 108 nur einseitig angeordnet. Es versteht sich, dass die Riemenförderer 108 auch beidseitig relativ zum Stab 104 vorgesehen werden können. Die Riemenförderer 108 können Umlenkrollen 109 aufweisen, die die Antriebe 107 integriert haben. Auf diese Weise lässt sich der Riemenförderer 108 platzsparend und kompakt bauen. Der Stab 104 wird über einen oder mehrere Stabantriebe 110 ein- und ausgefahren. Der Stabantrieb 110 kann wie die Umlenkrolle 109 in Form einer oder mehrerer integrierter Antriebsrollen 112 ausgebildet sein. Die Mantelfläche der Rolle 112 ist an die Form des Stabs 104 angepasst und vorzugsweise beschichtet, um ein Durchdrehen der Rollen 112 zu verhindern. Die Rollen 112 drehen um eine Achse, die vorzugsweise parallel zur Längsrichtung X orientiert ist. Alternativ sind die Stäbe mit einem oder mehreren Seilzügen verbunden, die vorzugsweise mehrfach um eine Antriebsrolle gewickelt sind, um einen schlupffreien Antrieb der Stäbe zu ermöglichen, wobei die Stäbe gleichzeitig gegen ein Herausfallen gesichert sind.

Neben (oder anstatt) den Rollen 112 sind Führungsrollen 113 für den Stab 104 vorgesehen, die derart seitlich zur Achse 102 angeordnet sind, dass der Stab 104 koaxial zur Achse 102 zwangsgeführt ist. Die Führungsrollen 113 drehen sich vorzugsweise lose um eine jeweilige Achse 114, die vorzugsweise parallel zur Y-Richtung orientiert ist. Es versteht sich, dass auch die Führungsrollen 113 angetrieben werden können, üblicherweise sind die Führungsrollen 113 aber lose drehend ausgeführt. Die Führungsrollen 113 können mit Hilfe von Bolzen 116 an einem hier beispielsweise aus zwei C-förmigen Profilen bestehenden Gestell 118 gesichert sein.

Bezug nehmend auf die Fig. 6 ist eine Zinkenanordnung 100 mit einer Vielzahl, vorzugsweise individuell, ein- und ausfahrbarer Zinken 101 in einem montierten Zustand perspektivisch dargestellt. Die Zinkenanordnung 100 liegt auf den Längsträgern 88 auf und ist fest mit diesen Längsträgern 88 verbunden. Die plattenförmigen Schieber 92-1 und 92-2 der Seitenführung 90 sind in einem auseinandergefahrenen Zustand gezeigt.

Fig. 7 zeigt eine Frontansicht einer Regalanordnung 18, ähnlich wie Fig. 3, nur in größerem Detail. In der Fig. 7 blickt man in der Längsrichtung X in die Regalgassen 36-1 und 36-2 hinein, die zwischen den Regalen 30-1 und 30-2 bzw. 30-3 und 30-4 definiert sind. Die Heber 42 sind in Form eines Einlagerlifts 122 im Regal 30-2 und eines Auslagerlifts 120 im Regal 30-3 angedeutet, die sich jeweils entlang eines Masts 124 in der vertikalen Richtung Y auf- und abbewegen.

Des Weiteren sind in der Regalgasse 36-1 zwei Zuführförderer 38-1 und 38-2 auf unterschiedlichen Höhen gezeigt, um Lagereinheiten 50 an gegenüber im Regal 30-2 angeordnete Übergabeplätze 44-1 und 44-2 in der Querrichtung Z abzugeben. Von dort holt der Einlagerlift 122 die Lagereinheiten 50 ab, transportiert sie nach oben und gibt sie wiederum in der Querrichtung Z an freie Übergabeplätze 48 ab, die in dem Regal 30-2 oberhalb oder unterhalb der Übergabeplätze 44-1 und 44-2 angeordnet sind.

Bei einer Auslagerung holt der Lift 120 Lagereinheiten 50 aus Pufferplätzen 48 ab, die im dritten Regal 30-3 oberhalb oder unterhalb von Übergabeplätzen 44-3 und 44-4 angeordnet sind. Die Übergabeplätze 44-3 und 44-4 koppeln an Abführförderer 40-1 und 40-2. Die Abführförderer 40-1 und 40-2 sind in der Regalgasse 36-2 auf unterschiedlichen Höhenniveaus angeordnet.

Die Fig. 7 dient zur Verdeutlichung der, vorzugsweise einseitigen, Führung der Shuttle 60 an jeweils einem der Regale 30-1 bis 30-4. Zur einfacheren Identifizierung eines einzigen Shuttles 60 ist in der Fig. 7 im oberen Bereich der zweiten Regalgasse 36-2 ein Shuttle 60 mit einer Hilfslinie umrandet. Dieses Shuttle 60 ist hängend am vierten Regal 30-4 gelagert, und zwar nur am vierten Regal 30-4. Gleiches gilt hinsichtlich der einseitigen Lagerung für die anderen in der Fig. 7 gezeigten Shuttle 60. In der Fig. 7 ist aus Gründen einer besseren Übersichtlichkeit kein Shuttle 60 gezeigt, das die gleichen Regalebenen Eᵢ bedient, wie ein auf gleicher Höhe angeordnetes Shuttle 60. Die in der Regalgasse 36-1 gezeigten Shuttle 60 sind alle am ersten Regal 30-1 aufgehängt. Die in der zweiten Regalgasse 36-2 gezeigten Shuttle 60 sind alle am vierten Regal 30-4 aufgehängt. Korrespondierende Shuttle 60, die in der Fig. 7 nicht gezeigt sind, wären in der Regalgasse 36-1 am zweiten Regal 30-2 und in der zweiten Regalgasse 36-2 am dritten Regal 30-3 aufgehängt.

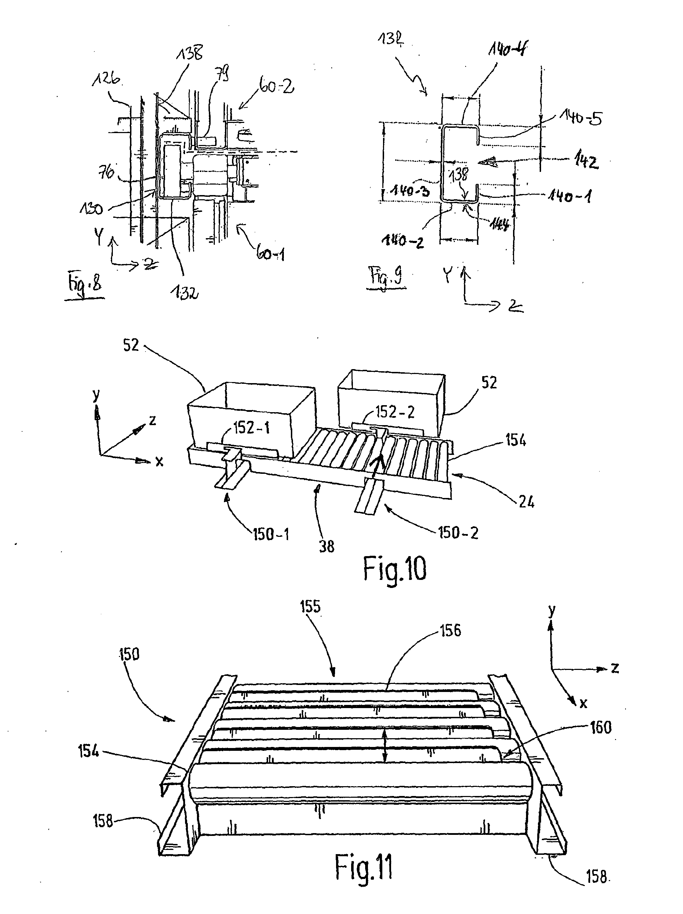

Die Shuttle 60 können über ihre Laufräder 76 in Führungen eingehängt werden, die allgemein mit 130 bezeichnet sind. Die Führungen 130 sind an Regalstehern 126 der Regale 30 in einer horizontalen Ausrichtung parallel zu den Regalgassen 36 befestigt Bei den Führungen 130 handelt es sich vorzugsweise um C-förmige Profile 132, die unter Bezugnahme auf die Figuren 8 und 9 noch näher erläutert werden. Alternativ können auch U-förmige, Omega-förmige oder ähnlich geformte Profile verwendet werden. Des Weiteren sind herkömmliche Längsträger 134 der Regale 30 gezeigt, die im Querschnitt ebenfalls ein C-Profil aufweisen können. Auf die Längsträger 134 können beispielsweise die Fachböden aufgelegt werden. Die Längsträger 134 können aber auch als Stromführungen 136 eingesetzt werden, die mit den Stromabnehmern 74 (vgl. Fig. 4) zur elektrischen Versorgung der Shuttle 60 wechselwirken.

Die Führungen 130, die Längsträger 134 und die Stromführungen 136 sind in diesem Sinne an den Längsseiten 138 der Regale 30 angebracht, die durch die freien Außenseiten der Regale 30 definiert sind.

Bezug nehmend auf Fig. 8 ist eine Vergrößerung eines Bereichs VIII in der Fig. 7 gezeigt. In Fig. 8 ist die Führung 130 in Form eines C-Profils 132 dargestellt, in welches ein erstes (unteres) Shuttle 60-1 mit seinem Laufrad 76 eingehängt ist. Das erste untere Shuttle 60-1 befindet sich unterhalb der mit einer Strichlinie dargestellten Hilfslinie. Ein zweites, oberes Shuttle 60-2 wechselwirkt ebenfalls mit der Führung 130 über sein Stützrad 79, welches in einer unteren Hälfte des zweiten Shuttles 60-2 angeordnet ist. Die Führung 130 dient also sowohl zur Aufhängung des unteren Shuttles 60-1 als auch zur Abstützung des oberen Shuttles 60-2. Das untere Shuttle 60-1 wird im Inneren 138 des C-förmigen Profils 132 geführt. Das obere Shuttle 60-2 wird am Äußeren 144 des C-förmigen Profils 132 abgestützt.

Bezug nehmend auf Fig. 9 ist eine Ausgestaltung eines C-förmigen Profils 132 im Querschnitt gezeigt, das z.B. aus Stahl mittels Falzen hergestellt werden kann. Das Profil 132 kann mehrere Schenkel 140 aufweisen. In Fig. 9 weist das Profil 132 fünf Schenkel 140-1 bis 140-5 auf. Das C-Profil definiert eine Öffnung 142, die in der Fig. 9 nach rechts (zur Regalgasse 36 hin) ausgerichtet ist. Die Laufräder 76 laufen im Inneren 138 des Profils 132 auf dem zweiten Schenkel 140-2. Die Stützräder 79 laufen an der Außenseite des fünften Schenkels 140-5, der vertikal orientiert ist. Der erste Schenkel 140-1 ist nicht zwingend erforderlich, dient aber der seitlichen Führung der Shuttle 60, indem die Führungsräder 78 dort an der Innenseite zur Anlage kommen, wie es exemplarisch in Fig. 8 gezeigt ist.

Fig. 10 zeigt eine perspektivische Darstellung von zwei Querversetzern 150-1 und 150-2. Konkret handelt es sich um einen ersten Schieber 152-1 und einen zweiten Schieber 152-2. Die Schieber 152 sind so ausgebildet, dass sie in der Querrichtung Z durch Zwischenräume 160 bewegt werden können, die zwischen benachbarten Rollen 154 definiert sind. Die in der Fig. 10 dargestellte Anordnung kommt z.B. im Bereich des Zuführförderers 38 der Figuren 2 und 3 zum Einsatz kommen, der den Übergabeplätzen 44 gegenüberliegt.

Als Querversetzer 150 können ferner auch Riemenförderer 156 in Form eines Riemenhebers 155 eingesetzt werden, die wiederum in den Zwischenräumen 160 zwischen benachbarten Rollen 154 angeordnet sein können, wie es exemplarisch in Fig. 11 gezeigt ist. Vorteil dieser Art von Querversetzers 150 ist, dass die Seitenwangen 150 des Rollenförderers 28 nicht wie beim Querversetzer 150 gemäß der Fig. 10 mit einem Schlitz versehen werden müssen, um den Durchtritt des Querversetzers 150 in die Zwischenräume 160 zu ermöglichen.

Die Riemenförderer 156 sind heb- und senkbar, so dass die Lagereinheiten 50 in einer abgesenkten Stellung der Riemenförderer 156 über die Rollen 154 in der Längsrichtung X gefördert werden können und in einer angehobenen Stellung der Riemenförderer 156 seitlich in der Querrichtung Z, z.B. zu einem Obergabeplatz 44, abgefördert werden können. Die Riemenförderer 156 können auch über die Breite des Förderers 38 oder 40 hinaus reichen, so dass sie in den oder die Übergabeplätze 44 hinein. Ein Querversetzer 150 kann sich also über einen der Förderer 38/40, beide Förderer 38/40 und den oder die Übergabeplätze 44 erstrecken.

Selbstverständlich können auch andere Elemente als Querversetzer 150 eingesetzt werden, wie z.B. Kettengliederbänder mit integrierten Rollen, wobei die Rollen gezielt aktiviert und deaktiviert werden können, um Lagereinheiten 50 seitlich vom Kettenförderer abzufördern.

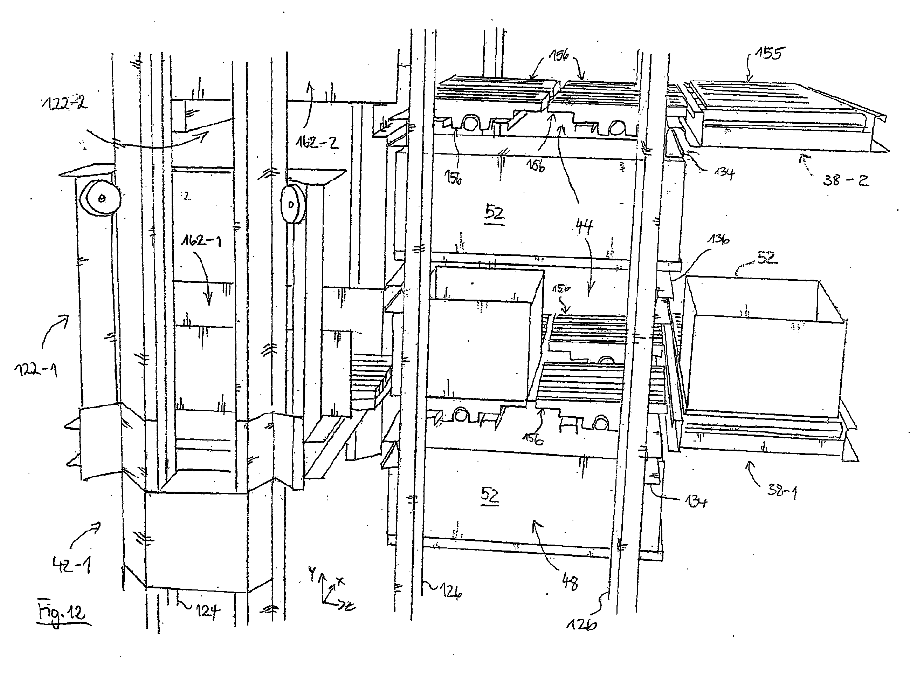

Bezug nehmend auf Fig. 12 ist eine perspektivische Ansicht in der Längsrichtung X in einem Bereich einer Regalanordnung 18 gezeigt, die zwei Heber 42 in Form eines Einlagerlifts 122, vier Übergabeplätze 44 und zwei Pufferplätze 48 sowie zwei Zuführförderer 38-1 und 38-2 in unterschiedlichen Höhen umfasst. Die Übergabeplätze 44, die jeweils zur doppelttiefen Handhabung von Lagereinheiten 50 ausgelegt sind, sind um die Höhe von zwei Regalebenen in der Vertikalrichtung Y voneinander beabstandet. Gleiches gilt für die Pufferplätze 48. Jeder der in der Fig. 12 dargestellten vier Übergabeplätze 44 weist zwei in der Querrichtung Z hintereinander angeordnete Riemenförderer 156 (ohne Hubfunktion) auf. Die Zuführförderer 38-1 und 38-2 weisen jeweils zwei in der Längsrichtung X hintereinander angeordnete Riemenheber 155 auf, die wiederum den Übergabeplätzen 44 in der Querrichtung Z gegenüberliegen. Die Riemenheber 155 werden hier z.B. durch Riemenförderer mit Hubfunktion realisiert.

Des Weiteren sind zwei Lastaufnahmemittel 162-1 und 162-2 des ersten und zweiten Einlagerlifts 122-1 und 122-2 gezeigt. Die Einlagerlifte 122-1 und 122-2 liegen den Übergabeplätzen 44 und den Pufferplätzen 48 in der Querrichtung Z gegenüber. Es versteht sich, dass Analoges für Auslagerlifte gilt.

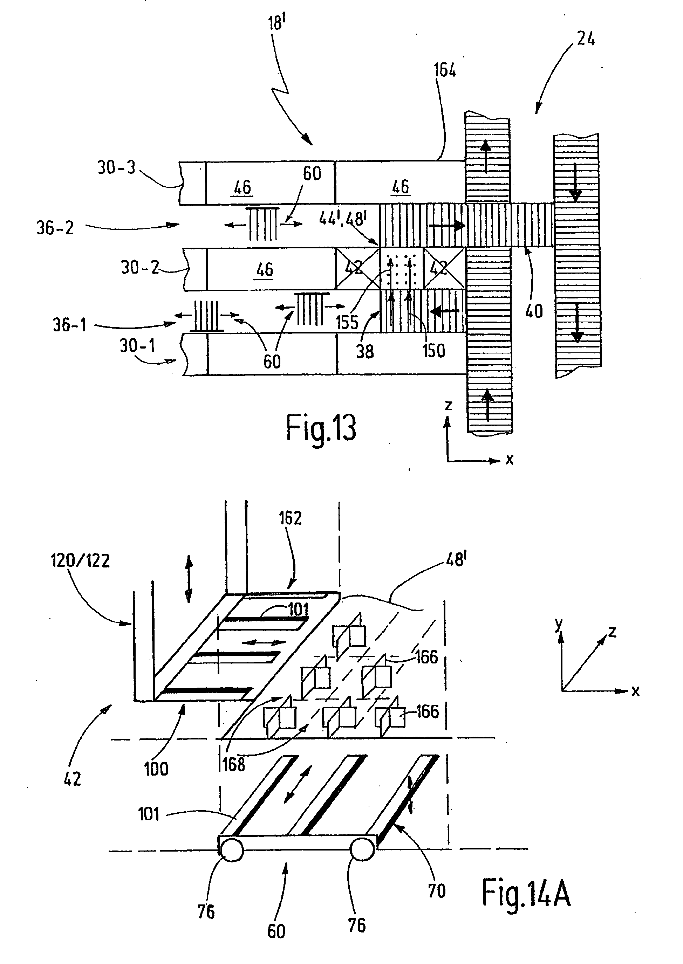

Bezug nehmend auf Fig. 13 ist eine abgewandelte Regalanordnung 18' in einer Draufsicht gezeigt.

In Fig. 13 sind drei Einzelregale 30-1 bis 30-3 gezeigt, die eine erste Regalgasse 36-1 und eine zweite Regalgasse 36-2 zwischen sich definieren, in denen wiederum mehrere Shuttle 60 in der Längsrichtung X verfahrbar betrieben werden. Der Förderer 24 ist in zwei unterschiedlichen Höhen angeordnet und kann (materialflusstechnisch) in einen Einlagerungs-Loop und einen Auslagerungs-Loop getrennt sein. Die Einlagerung erfolgt über den Zuführförderer 38, der auf einem unteren Höhenniveau angeordnet ist. Die Auslagerung erfolgt über einen Abführförderer 40, der auf einem höheren Höhenniveau als der Zuführförderer 38 angeordnet ist. Die Förderrichtungen sind in der Fig. 13 durch dunkle Pfeile angedeutet.

Nachdem eine Lagereinheit 50 ein Ende des Zuführförderers 38 in der ersten Regalgasse 36-1 erreicht hat, das einem Übergabeplatz 44' in der Querrichtung Z gegenüberliegt, kann die Lagereinheit 50 mit einem Querversetzer 150, der in Fig. 13 durch einen Doppelpfeil angedeutet ist, auf den Übergabeplatz 44' umgesetzt werden.

In der Längsrichtung X wird der Übergabeplatz 44 von zwei Hebern 42 umgeben, die zum Einlagern und/oder Auslagern von Lagereinheiten 50 eingesetzt werden können. Es versteht sich, dass sowohl unterhalb als auch oberhalb der Übergabeplätze 44', die auf den Höhenniveaus des Zuführförderer 38 und des Abführförderer 40 angeordnet sind, Pufferplätze 48' angeordnet sind.

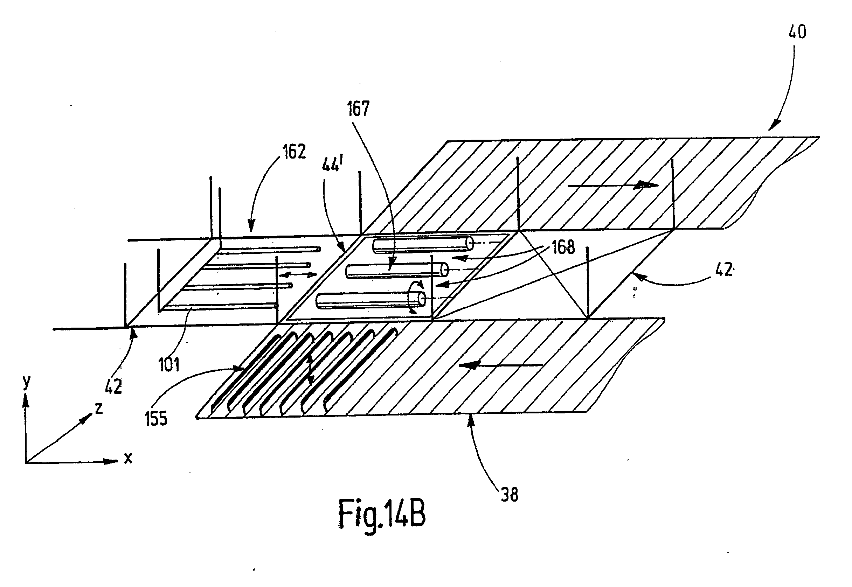

Bezug nehmend auf Fig. 14A ist ein Pufferplatz 48', wie er in der Regalanordnung 18' der Fig. 13 zum Einsatz kommt, schematisiert angedeutet. Es versteht sich, dass die nachfolgenden Ausführungen zum Pufferplatz 48' analog für die Übergabeplätze 44' der Fig. 13 gelten, wobei die Übergabeplätze 44' sich lediglich durch einen zusätzlichen Förderer, wie z.B. einen Riemenheber 155, von den Pufferplätzen 48' unterscheiden, wie es unter Bezugnahme auf Fig. 14B noch beschrieben werden wird.

Jeder Pufferplatz 48' ist eingerichtet, auf eine kämmende Weise mit dem Lastaufnahmemittel 70 der Shuttle 60 und auf eine kämmende Weise mit den Lastaufnahmemitteln 162 der Heber 42 bzw. Ein- und Auslagerlifte 120 und 122 wechselzuwirken. Zu diesem Zweck kann der Pufferplatz 48' z.B. einen Boden aufweisen, auf dem Erhebungen 166 vorzugsweise matrixförmig angeordnet sind. In Fig. 14A sind nur einige der Erhebungen 166 dargestellt. Die Erhebungen 166-können beispielsweise durch sternförmig ausgebildete Steher realisiert sein, die sowohl in der Querrichtung Z als auch in der Längsrichtung X Zwischenräume 168 lassen. In die Zwischenräume 168 können beispielsweise die Stäbe 104 der Zinkenanordnung 100 des Hebers 42 sowie die Stäbe 104 der Zinkenanordnung 100 des Lastaufnahmemittels 70 der Shuttle 60 in der Querrichtung Z eingreifen.

Im Vergleich zur Regalanordnung 18 der Fig. 2 erfolgt der Austausch von Lagereinheiten 50 zwischen dem Zuführförderer 38, dem Abführförderer 40 und den Übergabeplätzen 44' zwar weiterhin in der Querrichtung Z. Der Austausch zwischen den Hebern 42 und den Übergabeplätzen 44' bzw. den Pufferplätzen 48' erfolgt aber in der Längsrichtung X. Durch diese Maßnahme ist es möglich, die Heber 42, die Übergabeplätze 44' und die Pufferplätze 48' in das gleiche Regal zu integrieren, so dass zum einen auf Doppelregale verzichtet werden kann und zum anderen die Heber 42 sowohl zum Einlagern als auch zum Auslagern benutzt werden können.

Es versteht sich, dass allein der bzw. die Übergabeplätze 44' mit Fördertechnikkomponenten versehen werden müssen, die Lagereinheiten 50 mit dem Abführförderer 40 austauschen. Der Übergabeplatz 44', der allein einem Zuführförderer 38 gegenüberliegt, benötigt eigentlich keine Fördertechnik, da die Lastaufnahmemittel 162 der Heber 42 dort abgestellte, einzulagernde Lagereinheiten 50 selbstständig abholen können, indem die Zinken 101 in die Zwischenräume 168 in der Längsrichtung X eingefahren, indem das Lastaufnahmemittel 162 anschließend so weit angehoben wird, dass die einzulagernde Lagereinheit 50 abhebt, und die Zinken 101 der Zinkenanordnung 100 des Lastaufnahmemittels 162 des Hebers 42 anschließend eingefahren werden, vorzugsweise unter gleichzeitiger Betätigung der Riemenförderer 108, um die einzulagernde Lagereinheit 50 sicher auf das Lastaufnahmemittel 162 zu bewegen. Anschließend kann der Heber 42 in der vertikalen Richtung Y zu einem Pufferplatz 48' verfahren werden, wo die einzulagernde Lagereinheit 50 mittels der Riemenförderer 108 abgegeben wird, so dass die einzulagernde Lagereinheit 50 auf den Erhebungen 166 des Pufferplatzes 48' aufsitzt. Bewegt sich der Heber 42 zu einem anderen Pufferplatz 48', so kann er von dort eine auszulagernde Lagereinheit 50 auf die eben beschriebene Weise aufnehmen und an den Übergabeplatz 44' abgeben, der dem Abführförderer 40 zugeordnet ist.

Liegen der Zuführförderer 38 und der Abführförderer 40 auf der gleichen Höhe, muss der Übergabeplatz 44' mit einer zusätzlichen Fördertechnikkomponente, wie z.B. einem Riemenheber 155 ausgestattet sein, um die auszulagemde Lagereinheit 50 auf den Abführförderer 40 zu bewegen. Der Riemenheber 155 muss dabei so tief abgesenkt werden können, dass die Lastaufnahmemittel 162 der Heber 42 beim Aufnehmen und Abgeben von Lagereinheiten 50 nicht mit dem Riemenheber 155 kollidieren.

In der Fig. 14B ist ein Übergabeplatz 44' gezeigt. Der Übergabeplatz 44' liegt oberhalb oder unterhalb des Pufferplatzes 48'. Der Übergabeplatz 44' liegt in der Fig. 14B einem Zuführförderer 38 und einem Abführförderer 40 gegenüber. Es versteht sich, dass der Übergabeplatz 44' auch nur dem Zuführförderer 38 oder dem Abführförderer 40 gegenüberliegen könnte, wobei dann ein weiterer Übergabeplatz 44' in der Regalspalte vorgesehen wäre, der mit dem anderen Förderer 38 oder 40 wechselwirkt.

Der Übergabeplatz 44' ist mit einem Querversetzer 150 in Form eines Rollenkamms 167 ausgestattet. Der Rollenkamm 167 weist mehrere angetriebene Rollen auf, die in der Längsrichtung X orientiert sind und die die Lagereinheiten 50 in der Querrichtung Z bewegen können. Die Rollen des Rollenkamms 167 sind so zueinander beabstandet, dass sie Zwischenräume 168 zwischen sich definieren. Die Zwischenräume 168 sind so angeordnet und dimensioniert, dass die Zinken 101 des Lastaufnahmemittels 162 der Heber 42 in den Rollenkamm 167 zwecks Aufnahme einer Lagereinheit 50 einund ausgefahren werden können.

Bei einem Einlagerungsvorgang werden die Lagereinheiten 50 über den Zuführförderer 38 bis an dessen Ende transportiert, wo ein Querversetzer 150 z.B. in Form eines Riemenhebers 155 angeordnet ist. Der Riemenheber 155 ist in der Fig. 14B in seiner angehobenen Stellung gezeigt, so dass seine Riemen eine Lagereinheit 50 in der positiven Querrichtung Z vom Zuführförderer 38 auf den Übergabeplatz 44', das heißt auf die Rollen des Rollenkamms 167, fördern können. Die Höhe der Förderebenen, die durch den Riemenheber 155 und den Rollenkamm 167 definiert werden, sind aufeinander abgestimmt und vorzugsweise gleich. Während die Lagereinheit 50 vom Riemenheber 155 an den Übergabeplatz 44' übergeben wird, kann die Übergabe von den angetriebenen Rollen des Rollenkamms 167 unterstützt werden, indem die Rollen entsprechend angetrieben werden. Sobald die Lagereinheit 50 auf den Rollen des Rollenkamms 167 steht, können die Zinken 101 des Lastaufnahmemittels 162 des in der Fig. 14B links dargestellten Hebers 42 in die Zwischenräume 168 entlang der positiven Längsrichtung X eingefahren werden. Sobald die Zinken 101 unter der (nicht dargestellten) Lagereinheit 50 positioniert sind, kann der Heber 42 eine kleine Hubbewegung durchführen, so dass die Lagereinheit 50 von dem Rollenkamm 167 getrennt ist. Anschließend werden die Zinken des Lastaufnahmemittels 162 in der negativen Längsrichtung X wieder eingefahren, um das Lastaufnahmemittel 162 des Hebers 42 auf die Höhe einer gewünschten Regalebene Eᵢ zu verfahren.

Bei einem Auslagerungsvorgang holt das Lastaufnahmemittel 162 die auszulagernde Lagereinheit 50 von einem Pufferplatz 48' ab, wie er exemplarisch in der Fig. 14A gezeigt ist, und fährt auf die Höhe des Übergabeplatzes 44', wie er exemplarisch in der Fig. 14B gezeigt ist. Die in der Fig. 14B nicht gezeigten Riemen des Lastaufnahmemittels 162 werden betätigt, so dass die auszulagernde Lagereinheit 50 vom Lastaufnahmemittel 162 des Hebers 42 in der positiven Längsrichtung X auf den Rollenkamm 167 aufgeschoben wird. Sobald die zu lagernde Lagereinheit 50 auf dem Rollenkamm 167 steht, können die Rollen des Rollenkamms 167 derart betätigt werden, dass die auszulagernde Lagereinheit 50 in der positiven Querrichtung Z auf den Abführförderer 40 befördert wird.

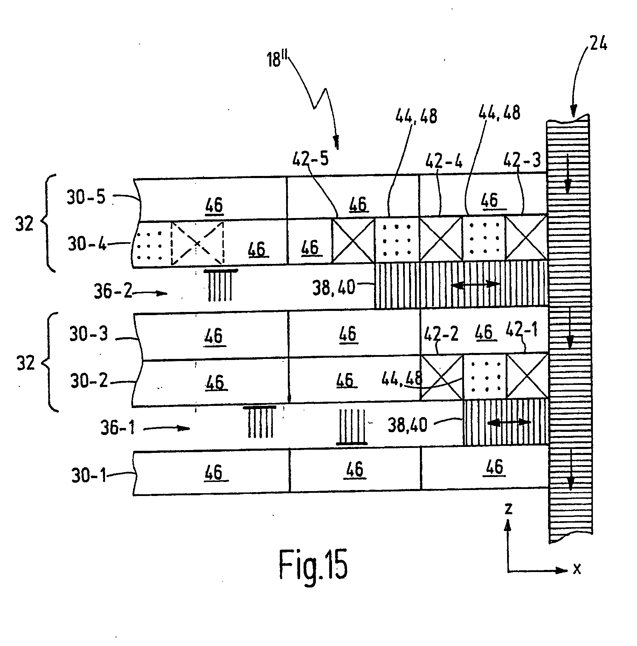

In Fig. 15 ist eine weitere Abwandlung einer Regalanordnung 18" gezeigt, die konzeptionell eine Fusion der Regalanordnungen 18 (Fig. 2) und 18' (Fig. 13) darstellt.

Die Regalanordnung 18" der Fig. 15 weist wieder Einzelregale 34 (30-1) und Doppelregale 32 (30-2, 30-3 und 30-4, 30-5) auf, wobei die Heber 42 jeweils in nur einem Regal 30 vorgesehen sind, selbst wenn eigentlich beide Regale 30 eines Doppelregals 32 zur Verfügung stünden, um die Heber 42, die Übergabeplätze 44 und die Pufferplätze 48 in den Regalen 30 unterzubringen.

Im Regal 30-2 ist eine Funktionseinheit bestehend aus zwei Hebern 42-1 und 42-2 sowie mindestens einem Übergabeplatz 44 und mindestens einem Pufferplatz 48 vorgesehen. Es versteht sich, dass, wie zuvor, jede Regalebene Eᵢ über mindestens einen Pufferplatz 48 mit Lagereinheiten 50 versorgt wird. Vorzugsweise ist jeder Regalebene Eᵢ ein eigener Pufferplatz 48 zugeordnet. Die in der Regalgasse 36-1 vorgesehene Fördertechnik kann sowohl als Zuführförderer 38 als auch als Abführförderer 40 betrieben werden.

Gleiches gilt für die Fördertechnik in der Regalgasse 36-2, die aber im Vergleich etwas tiefer in der Längsrichtung X in die Regalgasse 36-2 hineinragt. Die Fördertechnik ragt tiefer in die Regalgasse 36-2 hinein, um zwei Übergabeplätze 44 im Regal 30-4 mit Lagereinheiten 50 zu versorgen. Die beiden Übergabeplätze 44 im Regal 30-4 können jeweils von zwei Hebern 42 umgeben sein. Der am nächsten zur Stirnseite liegende Übergabeplatz 44 im Regal 30-4 wird von den beiden Hebern 42-3 und 42-4 umgeben. Der tiefer in der Regalgasse 36-2 liegende zweite Übergabeplatz 44 im Regal 30-4 wird von den beiden Hebern 42-4 und 42-5 umgeben. Der Heber 42-4 tauscht Lagereinheiten 50 vorzugsweise mit beiden Übergabeplätzen 44 im Regal 30-4 aus, und zwar in der Längsrichtung X. Weitere Heber 42 und Übergabeplätze 44 bzw. Pufferplätze 48 können mit zunehmender Regalgassentiefe im Regal 30-4 angeordnet werden, wie es durch Phantomlinien angedeutet ist. In diesem Fall müsste die Fördertechnik entsprechend weit in die Regalgasse 36-2 hineinreichen.

Ferner versteht es sich, dass weitere Paare aus Hebern 42 und Übergabe- bzw. Transferplätzen 44, 48 zusätzlich oder alternativ in solchen Regalen angeordnet werden können, die in der Fig. 15 keine derartigen Funktionsgruppen aufweisen, wie z.B. die Regale 30-3 und 30-5. Die Heber 42 können anstatt bidirektional zum Ein- und Auslagern auch ausschließlich unidirektional nur zum Einlagern oder Auslagern genutzt werden. Die Lastaufnahmemittel 162 der Heber 42 können ferner so abgewandelt werden, dass sie Lagereinheiten 50 sowohl in der Längsrichtung X als auch in der Querrichtung Z austauschen können. In diesem Fall sind die konzeptionellen Möglichkeiten nahezu unbegrenzt, wenn neben einem Lagereinheitenaustausch innerhalb des ein und selben Regals auch ein Austausch mit benachbarten Regalen erfolgen kann.

Erweitert man das Konzept der Regalanordnung 18" der Fig. 15 um eine oder mehrere, vorzugsweise voneinander unabhängige, Fördertechnikebenen, so lässt sich die Leistung nahezu beliebig skalieren. Die materialflusstechnische Engstelle des stirnseitigen Lifts entfällt. Mehrere Shuttle 60 können gleichzeitig auf Lagerplätze in der gleichen Regalebene Eᵢ zugreifen. Durch eine geeignete Wahl von Ein- und Auslagerstrategien lassen sich die Lastaufnahmemittel 70, vorausgesetzt die Shuttle 60 weisen jeweils mehrere Lastaufnahmemittel 70 auf, gleichzeitig zum Ein- und Auslagern einer entsprechenden Anzahl von Lagereinheiten 50 einsetzen. Dies bedeutet, dass während eines Stopps des Shuttles 60 in der Regalgasse 36 gleichzeitig mehrere Lagereinheiten 50 einund/oder ausgelagert werden. Eine Wahrscheinlichkeit, dass mehrere Lagereinheiten 50 während eines Stopps des Shuttles 60 gleichzeitig ausgetauscht werden können, steigt, wenn die Lastaufnahmemittel 70 unabhängig voneinander bewegt werden können, wie es oben für den Hub in der vertikalen Richtung Y bereits beschrieben ist. In diesem Fall kann der Abstand der Lastaufnahmemittel 70 von der starren Höhe zweier Regalebenen zwischen den Höhen von einer Regalebene oder drei Regalebenen (bei einer Gesamthöhe von vier Regalebenen des Shuttles 60) variiert werden. Die Wahrscheinlichkeit lässt sich zusätzlich erhöhen, wenn die Lastaufnahmemittel 70 der Shuttle 60 mit jeweils einem Längsantrieb ausgestattet werden. In diesem Fall kann jedes Lastaufnahmemittel 70, ähnlich einem Verschiebewagen, zusätzlich in der Längsrichtung X verfahren werden, während das zugehörige Shuttle 60 steht.

Ein weiterer Vorteil der Erfindung ist in der Sequenzierung zu sehen, die insbesondere bei Auslagerungsvorgängen von Interesse ist. Die Auswahl einer Regalebene Eᵢ, aus der eine Lagereinheit 50 ausgelagert werden soll, stellt eine erste Sequenzierungsstufe dar. Die Auswahl des Shuttles 60, welches die auszulagernde Lagereinheit aus der ausgewählten Lagerebene Eᵢ abholt, stellt die nächste Sequenzierungsstufe dar. Die Auswahl des Pufferplatzes 48, an den das Shuttle 60 die auszulagernde Lagereinheit 50 abgibt, stellt die dritte Sequenzierungsstufe dar. Da das mindestens eine Lastaufnahmemittel 70 des Shuttles 60 mit einem Hub ausgestattet ist, lassen sich die Regalebene Eᵢ und der Pufferplatz 48 auswählen. Die vierte Sequenzierungsstufe stellt die Auswahl des Hebers 42 dar, mit der die auszulagernde Lagereinheit 50 vom ausgewählten Pufferplatz 48 abgeholt wird. Eine fünfte Sequenzierungsstufe stellt die Auswahl des Übergabeplatzes 44 dar, an den der ausgewählte Heber 42 die auszulagernde Lagereinheit 50 abgibt.

Wenn man sich nun bewusst macht, dass mehrere Shuttle 60 pro Regalgasse 36 und mehrere Heber 42 pro Regal (Zeile) 30 vorgesehen sind bzw. vorgesehen werden können, ist es leicht nachvollziehbar, welches ungeheure Potenzial in der Erfindung liegt. So können z.B. die auszulagernden Lagereinheiten 50 bereits in der gewünschten Reihenfolge, das heißt sequenziert, vom Abführförderer 40 auf den Förderer 24 übergeben werden, um zu der Versandstation/Packstation 22 gefördert zu werden. Eine derartige Vorgehensweise ist besonders dann von Vorteil, wenn die Lagereinheiten 50 an einen (nicht dargestellten) Packroboter geliefert werden, der die Lagereinheiten 50 nach einem vorbestimmten Packmuster auf einen Versandträger, wie z.B. eine Euro-Palette, lädt.

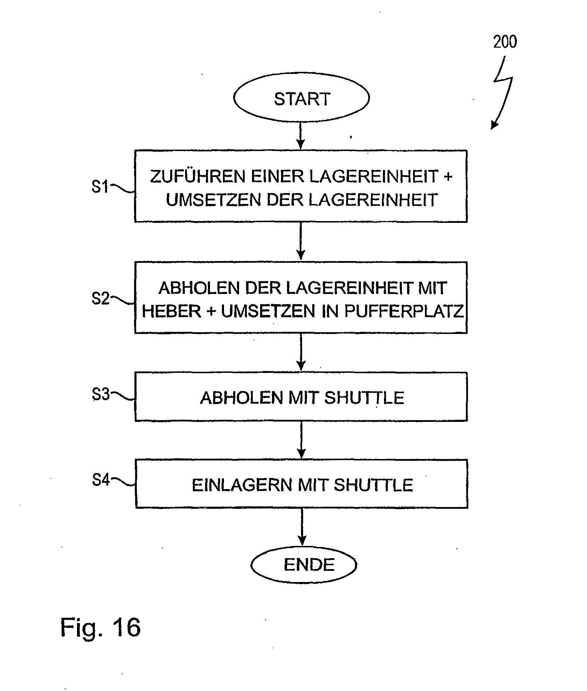

In Fig. 16 ist ein Flussdiagramm 200 für ein Verfahren zum Einlagern der Lagereinheiten 50 in ein Regal 30 mit mehreren, übereinander angeordneten Regalebenen Eᵢ gezeigt, die jeweils mehrere, nebeneinander angeordnete Stellplätze 46 aufweisen, wobei die Einlagerung über einen Zuführ-/Abführförderer 38, 40, der in eine Regalgasse 36 hineinragt und an mindestens einen Übergabeplatz 44 koppelt, wobei jede Regalebene Eᵢ von mindestens einem Lastaufnahmemittel 70 eines Fahrzeugs 60 bedient wird, durchgeführt wird, wobei das Verfahren die Folgenden Schritte aufweist: Zuführen (Schritt S1) einer Lagereinheit 50 über einen Zuführförderer 38; Bewegen der zugeführten Lagereinheit 50 vom Zuführförderer 38 auf den Übergabeplatz 44 in einer Querrichtung Z mittels eines Querversetzers 150, der in einen Förderweg des Zuführförderers 38 bewegbar ist; Abholen (Schritt S2) der Lagereinheit 50 vom Übergabeplatz 44 in einer Längsrichtung X oder in der Querrichtung Z mittels eines regalintegrierten Hebers 42, indem ein Lastaufnahmemittel 162 des Hebers 42 in den Übergabeplatz 44 horizontal ausgefahren, anschließend vertikal angehoben und anschließend horizontal eingefahren wird, vorzugsweise unter gleichzeitiger Betätigung eines Förderers 106, der Teil des Lastaufnahmemittels 162 des Hebers 42 ist; Bewegen der abgeholten Lagereinheit 50 in der vertikalen Richtung Y mittels des regalintegrierten Hebers 42; Abgeben der abgeholten Lagereinheit in der Längsrichtung X oder der Querrichtung Z an einen Pufferplatz 48, der oberhalb oder unterhalb des Übergabeplatzes 44 angeordnet ist, wobei der Pufferplatz 48 einer Einlagerungsregalebene zugeordnet ist, wobei der Pufferplatz 48 auf der Höhe der Einlagerungsregalebene oder benachbart dazu angeordnet ist, indem der Förderer 106 des Lastaufnahmemittels 162 des Hebers 42 betätigt wird, sobald der Heber 42 die Höhe des Pufferplatzes 48 erreicht hat; Abholen (Schritt S3) der Lagereinheit 50 aus dem Pufferplatz 48 mittels einem der Fahrzeuge 60, indem das Fahrzeug 60 horizontal in der Regalgasse entlang dem Regal 30 zu einer Regalspalte, die den Übergabeplatz 44 und den Pufferplatz 48 aufweist, verfahren wird und indem ein Lastaufnahmemittel 70 des Fahrzeugs 60, sofern es erforderlich ist, vertikal auf die Höhe des Pufferplatzes 48 bewegt wird und indem dann das Lastaufnahmemittel 70 des Fahrzeugs 60 horizontal ausgefahren, vertikal angehoben und anschließend wieder eingefahren wird, vorzugsweise unter gleichzeitiger Betätigung eines Förderers 106, der Teil des Lastaufnahmemittels 70 des Fahrzeugs 60 ist; Bewegen des Fahrzeugs 60 in einer horizontalen Richtung X zu einer weiteren Regalspalte, die einen Einlagerungsplatz aufweist, und, sofern es erforderlich ist, vertikales Bewegen des Lastaufnahmemittels 70 des Fahrzeugs 60 auf die Höhe des Einlagerungsplatzes; und Betätigen (Schritt S4) des Förderers 106 des Lastaufnahmemittels 70 des Fahrzeugs 60 derart, dass die Lagereinheit 50 auf oder in den Einlagerungsplatz verschoben wird.

Anstatt "klassischer" Heber 42, bei denen die Lastaufnahmemittel 162 an mästähnlichen Elementen auf und ab bewegt werden, können auch Paternosterartige Lifte eingesetzt werden, die vorzugsweise nur in einer Richtung betrieben werden. Dies bedeutet, dass die Paternoster nur aufwärts oder nur abwärts fördern.

Die Shuttle 60 können auch im Modus "Roaming" betrieben werden. Beim Roaming können die Shuttle zwischen Modulen 54 (vertikal) umgesetzt werden, indem entsprechende Shuttle-Lifte bzw. -Heber vorgesehen sind. In diesem Sinne muss nicht jedes Modul 54 maximal mit Shuttle 60 besetzt sein. Die Shuttle können vielmehr bedarfsgerecht zwischen den Modulen wechseln.

Vorzugsweise weist jedes Regal 30 die gleiche Anzahl von Regalebenen Eᵢ bzw. Modulen 54 auf, die jeweils die gleiche vertikale Teilung aufweisen.

Auch wenn miteinander überlappende Shuttle 60 oben immer als auf gleicher Höhe (über ihre Laufschienen 132) angeordnet beschrieben wurden, versteht es sich, dass die überlappenden Shuttle 60 bzw. deren Laufschienen 132 vertikal versetzt an sich gegenüberliegenden Längsseiten 138 der Regalgasse 36 angeordnet sein können. Diese Art der Anordnung ist besonders im Bereich der Zuführ- und Abführförderer 38 und 40 von Vorteil. Außerdem können die Shuttle 60 unterschiedlich hoch ausgebildet sein. Dies macht sich wiederum besonders im Bereich der Förderer 38 und 40 bezahlt, wenn dort z.B. ein Modul 54 (inkl. entsprechend angepasstem Shuttle 60) definiert wird, das z.B. nur 2 Regalebenen Eᵢ umfässt, wohingegen die restlichen Module 54 z.B. vier Regalebenen Eᵢ umfassen.

An die in den Fig. 2, 13 und 15 beschriebenen Regalanordnungen 18 können Kommissionier-, Pack- oder ähnliche Arbeitsplätze direkt anschließen, vorzugsweise direkt an solche Regale, die außen liegen, wie z.B. das Regal 30-1.

Einzelne Regalgassen 36 können über Fördertechnikkomponenten, die im Wesentlichen in der Querrichtung Z orientiert sind und z.B. durch die Regale 30 laufen, direkt materialflusstechnisch in Verbindung stehen, um einen gassenübergreifenden Austausch von Lagereinheiten 50 ohne Einbindung der Heber 42 zu ermöglichen.

In der obenstehenden Beschreibung der Figuren hat man sich bei der Wahl der Orientierung der Koordinatensysteme generell an die in der Lagerlogistik übliche Bezeichnung gehalten, so dass die Längsrichtung eines Regals 30 mit X, die Tiefe des Regals 30 (bzw. die Querrichtung eines RBG) mit Z und die (vertikale) Höhe des Regals 30 mit Y bezeichnet wurde.

Des Weiteren wurden gleiche Teile und Merkmale mit gleichen Bezugszeichen versehen. Die in der Beschreibung enthaltenen Offenbarungen sind sinngemäß auf gleiche Teile und Merkmale mit demselben Bezugszeichen übertragbar. Lage- und Orientierungsangaben (z.B. "oben", "unten", "seitlich", "längs", "quer", "horizontal", "vertikal" und Ähnliches) sind auf die unmittelbar beschriebene Figur bezogen. Bei einer Änderung der Lage oder Orientierung sind diese Angaben aber sinngemäß auf die neue Lage bzw. Orientierung zu übertragen.

## Patentansprüche

1. Fahrzeug (60) zum Betrieb innerhalb einer Regalgasse, die zwischen einem ersten Regal und einem gegenüberliegenden zweiten Regal definiert ist, wobei das Fahrzeug aufweist:
ein Fahrgestell (62), das sich im Wesentlichen entlang einer Längsseite (138) des ersten Regals (30) erstreckt, an der das Fahrzeug (60) geführt verfahrbar ist;
mindestens einen Fahrantrieb (64);
einen Hubschlitten (68), der vertikal beweglich in dem Fahrgestell (62) gelagert ist; einen Hubantrieb (66) zum vertikalen Bewegen des Hubschlittens (68) relativ zum Fahrgestell (62);
mindestens ein Lastaufnahmemittel (70), das derart frei kragend am Hubschlitten (68) befestigt ist, dass ein anderes Fahrzeug (60), das in der Regalgasse (36) gleiche Regalebenen (Eᵢ) bedient und das an einer gegenüberliegenden Längseite (138) des zweiten Regals (30) geführt ist, während einer Längsfahrt in der Regalgasse am Fahrzeug vorbeifahren kann, und
dass Zu- und/oder Abführförderer über- und unterfahren werden können, die in Regalgasse hinein reichen, **dadurch gekennzeichnet, dass** mehrere Lastaufnahmemittel (70) jeweils frei kragend am Hubschlitten (68) befestigt sind, so dass ein anderes Fahrzeug (60), das in der Regalgasse (36) gleiche Regalebenen (Eᵢ) bedient und das an einer gegenüberliegenden Längsseite (138) des zweiten Regals (30) geführt ist während einer Längsfahrt in der Regal gasse am Fahrzeug vorbeifahren kann, wobei
jedes Lastaufnahmemittel (70) einen eigenen Hubantrieb (66) aufweist, um in der vertikalen Richtung (Y) individuell verfahrbar zu sein.

2. Fahrzeug nach Anspruch 1, **dadurch gekennzeichnet, dass** jedes Lastaufnahmemittel (70) in einer horizontalen Ebene (XZ) orientiert ist und in Querrichtung (Z), vorzugsweise individuell, ein- und ausfahrbare Zinken (100) sowie mindestens einen Querförderer (106) aufweist.

3. Fahrzeug nach Anspruch 1 oder 2, **dadurch gekennzeichnet, dass** jedes Lastaufnahmemittel (70) zusätzlich eine in Längsrichtung (X) verstellbare Seitenführung (90) aufweist, die vorzugsweise ein Paar von Schiebern (92) aufweist, wobei sich jeder Schieber (92) im Wesentlichen in einer vertikalen Querebene (YZ) senkrecht zur Längsrichtung (X) erstreckt.

4. Fahrzeug nach einem der Ansprüche 1 bis 3, **dadurch gekennzeichnet, dass** das Fahrgestell (62) Laufräder (76) und Stützräder (79) aufweist.

5. Fahrzeug nach Anspruch 4, **dadurch gekennzeichnet, dass** die Laufräder (76) in einer oberen Hälfte des Fahrgestells (62) gelagert sind und vorzugsweise um eine Achse (76') in Querrichtung (Z) drehen, und wobei die Stützräder (79) in einer unteren Hälfte des Fahrgestells (62) gelagert sind und vorzugsweise um eine Achse (79') in der vertikalen Richtung (Y) drehen.

6. Fahrzeug nach Anspruch 5, **dadurch gekennzeichnet, dass** die Laufräder (76) innen und die Stützräder (79) außen, an auf gleicher Höhe gegenüberliegend angebrachten, vorzugsweise C-förmigen, Führungsprofilen (132) anliegen, während das Fahrzeug (60) in der Regalgasse (36) verfahren wird.

7. Fahrzeug nach einem der Ansprüche 1 bis 6, **dadurch gekennzeichnet, dass** die Lastaufnahmemittel (70-1, 70-2) in der vertikalen Richtung (Y) jeweils so zueinander beabstandet (94) sind, dass sie mit entsprechend beabstandeten Lastaufnahmemitteln (70) des anderen Fahrzeugs, das identische Regalebenen (Eᵢ) in der Regalgasse (36) bedient, bei einer Längsfahrt nicht kollidieren.

8. Fahrzeug nach einem der Ansprüche 1 bis 7, **dadurch gekennzeichnet, dass** jedes Lastaufnahmemittel (70) über Kragarme (86) mit dem Hubschlitten (68) verbunden ist.

9. Fahrzeug nach einem der Ansprüche 1 bis 8, wobei sich das Fahrgestell über eine
gesamte Höhe eines Regalmoduls (54) erstreckt.

## Claims

1. Vehicle (60) for the operation within a rack aisle defined between a first rack and an oppositely arranged second rack, wherein the vehicle comprises:
a traveling frame (62) substantially extending along a longitudinal side (138) of the first rack (30), along which the vehicle (60) can travel in a guided manner;
at least one travel drive (64);
at least one lifting carriage (68) supported in the traveling frame (62) in a vertically movable manner;
a lifting drive (66) for vertically moving the lifting carriage (68) relative to the traveling frame (62);
at least one load-handling device (70) which is mounted in a freely cantilevered manner to the lifting carriage (68) such that another vehicle (60), which serves identical rack planes (Eᵢ) in the rack aisle and which is guided along an oppositely of the arranged longitudinal side (138) of the second rack (30), can pass the vehicle in the rack aisle during a longitudinal ride, and such that feeding and/or discharging conveyors, which reach into the rack aisle, can be undercrossed or overcrossed, **characterized in that**
several load-handling devices (70) are respectively mounted in a freely cantilevered manner to the lifting carriage (68) so that the other vehicle (60), which serves identical rack planes (Eᵢ) in the rack aisle and which is guided at an oppositely arranged longitudinal side (138) of the second rack (30), can pass the vehicle in the rack aisle during a longitudinal ride, wherein
each load-handling device (70) has a separate lifting drive (66) for being individually movable in the vertical direction (Y).

2. The vehicle of claim 1, **characterized in that** each load-handling device (70) is orientated in a horizontal plane (XZ) and comprises prongs (100) which can be extended and retracted, preferably individually, as well as a transversal conveyor (106).

3. The vehicle of claim 1 or 2, **characterized in that** each load-handling device (70) additionally comprises a lateral guidance (90) adjustable in a longitudinal direction (X), which preferably comprises a pair of pushers (92), wherein each pusher (92) substantially extends in a vertical transversal plane (YZ) perpendicularly to the longitudinal direction (X).

4. The vehicle of one of the claims 1 to 3, **characterized in that** the traveling frame (62) comprises traveling wheels (76) and supporting wheels (79).

5. The vehicle of claim 4, **characterized in that** the traveling wheels (76) are supported in an upper half of the traveling frame (62) and preferably rotate about an axis (76') in the transversal direction (Z), and wherein the supporting wheels (79) are supported in a lower half of the traveling frame (62) and preferably are rotatable about an axis (79') in the vertical direction (Y).

6. The vehicle of claim 5, **characterized in that** the traveling wheels (76) contact the inside of and the supporting wheels (79) contact the outside of guiding profiles (132) attached oppositely at the same height and preferably having a C-shape, while the vehicle (60) travels in the rack aisle (36).

7. The vehicle of one of claims 1 to 6, **characterized in that** the load-handling device (70-1, 70-2) are spaced in the vertical direction (Y) respectively such that they do not collide with correspondingly spaced load-handling devices (70) of the other vehicle serving the identical rack planes in the rack aisle (36).

8. The vehicle of one of claims 1 to 7, **characterized in that** each load-handling device (70) is connected through cantilever arms (86) to the lifting carriage (68).

9. The vehicle of one of claims 1 to 8, wherein the traveling frame extends over an entire height of a rack module (54).

## Revendications

1. Véhicule (60) pour le fonctionnement à l'intérieur d'une voie de rayonnage, qui est définie entre un premier rayonnage et un deuxième rayonnage opposé, le véhicule présentant :
un châssis (62) qui s'étend essentiellement le long d'un côté longitudinal (138) du premier rayonnage (30), sur lequel le véhicule (60) peut être déplacé de manière guidée ;
au moins un entraînement de conduite (64) ;
un chariot de levage (68), qui est supporté de manière déplaçable verticalement dans le châssis (62) ;
un entraînement de levage (66) pour le déplacement vertical du chariot de levage (68) par rapport au châssis (62) ;
au moins un moyen de réception de charge (70) qui est fixé de manière autoportante sur le chariot de levage (68) de telle sorte qu'un autre véhicule (60) qui utilise, dans la voie de rayonnage (36), les mêmes plans de rayonnage (Eᵢ) et qui est guidé sur un côté longitudinal opposé (138) du deuxième rayonnage (30), puisse passer devant le véhicule dans la voie de rayonnage pendant une conduite dans le sens de la longueur, et de telle sorte que des convoyeurs d'amenée et/ou d'évacuation qui s'étendent à l'intérieur de la voie de rayonnage puissent être déplacés par le haut et par le bas, **caractérisé en ce que** plusieurs moyens de réception de charge (70) sont fixés à chaque fois de manière autoportante sur le chariot de levage (68), de telle sorte qu'un autre véhicule (60) qui utilise, dans la voie de rayonnage (36), les mêmes plans de rayonnage (Eᵢ) et qui est guidé sur un autre côté longitudinal opposé (138) du deuxième rayonnage (30), puisse passer devant le véhicule pendant une conduite dans le sens de la longueur dans la voie de rayonnage,
chaque moyen de réception de charge (70) présentant un entraînement de levage propre (66),
afin de pouvoir être déplacé individuellement dans la direction verticale (Y).

2. Véhicule selon la revendication 1, **caractérisé en ce que** chaque moyen de réception de charge (70) est orienté dans un plan horizontal (XZ) et présente, dans la direction transversale (Z), des dents pouvant être rentrées et sorties (100), de préférence individuellement, ainsi qu'au moins un convoyeur transversal (106).

3. Véhicule selon la revendication 1 ou 2, **caractérisé en ce que** chaque moyen de réception de charge (70) présente en outre un guidage latéral (90) pouvant être réglé dans la direction longitudinale (X), lequel présente de préférence une paire de coulisseaux (92), chaque coulisseau (92) s'étendant perpendiculairement à la direction longitudinale (X) essentiellement dans un plan vertical transversal (YZ).

4. Véhicule selon l'une quelconque des revendications 1 à 3, **caractérisé en ce que** le châssis (62) présente des roues de roulement (76) et des roues de support (79).

5. Véhicule selon la revendication 4, **caractérisé en ce que** les roues de roulement (76) sont supportées dans une moitié supérieure du châssis (62) et tournent de préférence autour d'un axe (76') dans la direction transversale (Z), et dans lequel les roues de support (79) sont supportées dans une moitié inférieure du châssis (62) et tournent de préférence autour d'un axe (79') dans la direction verticale (Y).

6. Véhicule selon la revendication 5, **caractérisé en ce que** les roues de roulement (76) s'appliquent à l'intérieur et les roues de support (79) à l'extérieur, contre des profilés de guidage (132) de préférence en forme de C, montés en regard à la même hauteur, tandis que le véhicule (60) est déplacé dans la voie de rayonnage (36).

7. Véhicule selon l'une quelconque des revendications 1 à 6, **caractérisé en ce que** les moyens de réception de charge (70-1, 70-2) sont espacés (94) les uns des autres dans la direction verticale (Y) de telle sorte qu'ils n'entrent pas en collision dans le cas d'une conduite dans le sens de la longueur, avec des moyens de réception de charge (70), espacés de manière correspondante, de l'autre véhicule qui utilise des plans de rayonnage identiques (Eᵢ) dans la voie de rayonnage (36).

8. Véhicule selon l'une quelconque des revendications 1 à 7, **caractérisé en ce que** chaque moyen de réception de charge (70) est connecté par le biais de bras en porte-à-faux (86) au chariot de levage (68).

9. Véhicule selon l'une quelconque des revendications 1 à 8, dans lequel le châssis s'étend sur toute la hauteur d'un module de rayonnage (54).
